# EUROPEAN PATENT SPECIFICATION

(11) **EP 3 767 483 B1**
(45) Date of publication and mention of the grant of the patent: **18.09.2024**
(21) Application number: 19766447.7
(22) Date of filing: 25.01.2019
(51) Int. Cl.: G06F 16/583

(54) **METHOD, DEVICE, SYSTEM, AND SERVER FOR IMAGE RETRIEVAL, AND STORAGE MEDIUM**
VERFAHREN, VORRICHTUNG, SYSTEM UND SERVER FÜR BILDABRUF UND SPEICHERMEDIUM
PROCÉDÉ, DISPOSITIF, SYSTÈME, ET SERVEUR DE RÉCUPÉRATION D'IMAGE, ET SUPPORT D'INFORMATIONS

(30) Priority: 12.03.2018 CN 201810200560
(43) Date of publication of application: 20.01.2021
(73) Proprietor: Tencent Technology (Shenzhen) Company Limited, Shenzhen, Guangdong, 518057 (CN)
(72) Inventor: HUANG, Guizhou, Shenzhen, Guangdong 518057 (CN); SONG, Xiangyu, Shenzhen, Guangdong 518057 (CN); HE, Wei, Shenzhen, Guangdong 518057 (CN); GUO, De'an, Shenzhen, Guangdong 518057 (CN); JIANG, Qiquan, Shenzhen, Guangdong 518057 (CN)
(74) Representative: AWA Sweden AB
(86) International application number: PCT/CN2019/073116
(87) International publication number: WO 2019/174414

(56) References cited:
- CN-A- 101 964 041
- CN-A- 102 508 910
- CN-A- 103 678 702
- CN-A- 107 729 935
- US-A1- 2008 243 934
- US-A1- 2010 185 615
- US-B1- 8 942 487

## Description

This application claims priority to Chinese Patent Application No. 201810200560X, entitled "METHOD, DEVICE, SYSTEM, AND SERVER FOR IMAGE RETRIEVAL, AND STORAGE MEDIUM" filed with the Chinese Patent Office on March 12, 2018.

### FIELD OF THE TECHNOLOGY

The present disclosure relates to the field of computer technologies, and in particular, to an image retrieval technology.

### BACKGROUND OF THE DISCLOSURE

The image retrieval technology has been widely applied to various fields. For example, for a shopping platform, it may need to find, from multiple product images stored in a database according to an image used for retrieval and provided by a user, a product image similar to the image used for retrieval, to further find a product corresponding to the product image. For another example, for a copyright authentication platform applying image-based copyright authentication, it needs to query, according to an image used for retrieval and provided by a user, a database for an image similar to the image used for retrieval, to provide a basis for copyright authentication.

In an image retrieval process, to query a database for an image similar to the image used for retrieval, similarity between the image used for retrieval and each image in the database has to be calculated. It is relatively complex and time-consuming to calculate the similarity between two images. In addition, because of the large quantity of images in the database, the calculation of the similarity between each image in the database and the image used for retrieval definitely leads to an excessively large data calculation amount, causing excessively low image retrieval efficiency. US 8 942 487 B1 discloses receiving a target image and producing a target image fingerprint, splitting the target image fingerprint into segments, retrieving a subset of candidate images with the same fingerprint sequence for each fingerprint segment from the retrieved hash tables. CN 107 729 935 A discloses calculating similarity between images using hamming distance.

### SUMMARY

In view of this, the present disclosure provides a method, an apparatus, a system, a server, and a storage medium for image retrieval, to reduce a data processing amount in an image retrieval process and improve image retrieval efficiency.

To achieve the foregoing objective, according to a first aspect, the present disclosure provides an image retrieval method, applied to a server, including:
obtaining a first hash value of a reference image used for retrieval, where the first hash value represents an image feature of the reference image;
splitting the first hash value into a preset quantity of first hash value segments having different sequence positions in the first hash value;
for each of the first hash value segments, obtaining a target hash table according to the sequence position of the first hash value segment, and retrieving, from hash value segments in the target hash table, second hash value segments that are the same as the first hash value segment, wherein the target hash table is used for storing hash value segments, which are at the sequence position of the first hash value segment, in hash values of images; and
retrieving, from candidate images to which the second hash value segments respectively belong, a target image similar to the reference image,

where the target hash table stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other;
the retrieving, from hash value segments in the target hash table, second hash value segments that are the same as the first hash value segment includes:
   determining a target linked list from the at least one linked list of the target hash table, wherein the second hash value segment stored in each node of the target linked list is the same as the first hash value segment; and
the retrieving, from candidate images to which the second hash value segments respectively belong, a target image similar to the reference image includes:
   obtaining, from nodes in the target linked list, second hash values of the candidate images to which the second hash value segments respectively belong, wherein the second hash values respectively represent the image feature of the candidate images;
   calculating a hamming distance between each of the candidate images and the reference image according to the first hash value of the reference image and the second hash values of the candidate images; and
   retrieving, from the candidate images to which the second hash value segments respectively belong, the target image whose hamming distance to the reference image is less than a preset threshold.

According to a second aspect, the present disclosure further provides an image retrieval apparatus, including:
a hash obtaining unit, configured to obtain a first hash value of a reference image used for retrieval, where the first hash value represents an image feature of the reference image;
a hash splitting unit, configured to split the first hash value into a preset quantity of first hash value segments having different sequence positions in the first hash value;
a hash retrieval unit, configured to, for each of the first hash value segments, obtain a target hash table according to the sequence position of the first hash value segment, and retrieve, from hash value segments in the target hash table, second hash value segments that are the same as the first hash value segment, wherein the target hash table is used for storing hash value segments that are at the sequence position of the first hash value segment in hash values of images; and
an image matching unit, configured to retrieve, from candidate images to which the second hash value segments respectively belong, a target image similar to the reference image,

where the target hash table obtained by the hash retrieval unit stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other; and
the hash retrieval unit includes:
   a linked list determining subunit, configured to determine the target hash table according to the sequence position of the first hash value segment, and determine a target linked list used for storing the first hash value segment, from the at least one linked list of the target hash table, wherein the second hash value segment stored in each node of the target linked list is the same as the first hash value segment; and
the image matching unit includes:
   a hash determining unit, configured to obtain, from nodes in the target linked list, second hash values of the candidate images to which the second hash value segments respectively belong, wherein the second hash values respectively represent the image feature of the candidate images;
   a distance calculation unit, configured to calculate a hamming distance between each of the candidate image and the reference image according to the first hash value of the reference image and the second hash values of the candidate images; and
   a distance matching unit, configured to retrieve, from the candidate images to which the second hash value segments respectively belong, the target image whose hamming distance to the reference image is less than a preset threshold.

According to a third aspect, the present disclosure further provides a server, including a processor and a memory. The memory stores a program. The processor is configured to execute the program stored in the memory, to perform the image retrieval method according to the first aspect.

According to a fourth aspect, the present disclosure further provides a readable storage medium storing a computer program. The computer program is used to, when being loaded and executed by a processor, perform the image retrieval method according to the first aspect.

According to a fifth aspect, the present disclosure further provides an image retrieval system, including:
at least one master server and multiple slave servers;
where the master server is configured to obtain a first hash value of a reference image used for retrieval, the first hash value representing an image feature of the reference image; split the first hash value into a preset quantity of first hash value segments having different sequence positions in the first hash value; transmit the preset quantity of first hash value segments to the multiple slave servers; and receive a query result returned from the slave server, the query result including at least information of a target image that is similar to the reference image and that is retrieved by the slave server; and
the slave server is configured to obtain, according to the sequence position of the first hash value segment, a target hash table from an area section in which the slave server is responsible for retrieval, and retrieve, from hash value segments in the target hash table, second hash value segments that are the same as the first hash value segment, the area section being a partial storage area of a storage space of a database, and the target hash table being used for storing hash value segments, which are at the sequence position of the first hash value segment, in hash values of images; retrieve, from candidate images to which the second hash value segments respectively belong, the target image similar to the reference image; and transmit the information of the retrieved target image to the master server,

where the target hash table stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other; and
the slave server is further configured for:
   determining a target linked list from the at least one linked list of the target hash table, wherein the second hash value segment stored in each node of the target linked list is the same as the first hash value segment; and
   obtaining, from nodes in the target linked list, second hash values of the candidate images to which the second hash value segments respectively belong, wherein the second hash values respectively represent the image feature of the candidate images;
   calculating a hamming distance between each of the candidate images and the reference image according to the first hash value of the reference image and the second hash values of the candidate images; and
   retrieving, from the candidate images to which the second hash value segments respectively belong, the target image whose hamming distance to the reference image is less than a preset threshold.

In the image retrieval method provided in the embodiments of the present disclosure, after obtaining a first hash value of a reference image used for retrieval, a server first splits the first hash value into a preset quantity of first hash value segments. Then for each of the first hash value segments, the server determines, according to a sequence position of the first hash value segment in the first hash value, a target hash table for the first hash value segment, and retrieves, from hash value segments stored in the target hash table, second hash value segments that are the same as the first hash value segment. The target hash table is used for storing hash value segments, which have the same sequence position as the first hash value segment, in hash values of images in a database. The server then retrieves, from candidate images to which the second hash value segments respectively belong, a target image similar to the reference image. Compared with a method of determining a target image by calculating similarity between the reference image and each image in the database in the related art, in the technical solutions provided in the embodiments of the present disclosure, the candidate images having the same hash value segment at the same sequence position as the reference image are first selected, and then the target image similar to the reference image is determined by calculating similarity between the reference image and each candidate image. In this way, only the similarity between each of a small quantity of candidate images and the reference image needs to be calculated, thereby greatly reducing a calculation amount in an image retrieval process and improving image retrieval efficiency.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following descriptions show merely embodiments of the present disclosure, and a person of ordinary skill in the art may still derive other accompanying drawings from the provided accompanying drawings without creative efforts.
FIG. 1 is a schematic diagram of a structure of an application scenario to which an image retrieval method according to an embodiment in the present disclosure is applicable.
FIG. 2a is a schematic flowchart of constructing a hash table according to an embodiment in the present disclosure.
FIG. 2b is a schematic diagram of respectively storing hash value segments obtained by splitting a hash value of an image to different hash tables.
FIG. 3 is a schematic flowchart of an image retrieval method according to an embodiment in the present disclosure.
FIG. 4 is a schematic diagram of a structure of another application scenario to which an image retrieval method according to an embodiment in the present disclosure is applicable.
FIG. 5 is a schematic flowchart of a master server configuring a slave server according to an embodiment in the present disclosure.
FIG. 6 is another schematic flowchart of an image retrieval method according to an embodiment in the present disclosure.
FIG. 7 is a schematic structural diagram of an image retrieval apparatus according to an embodiment in the present disclosure.
FIG. 8 is a schematic diagram of architecture of a server according to an embodiment in the present disclosure.

### DESCRIPTION OF EMBODIMENTS

The image retrieval method in the embodiments of the present disclosure may be applied to multiple different scenarios, such as copyright authentication of a picture, or product image retrieval.

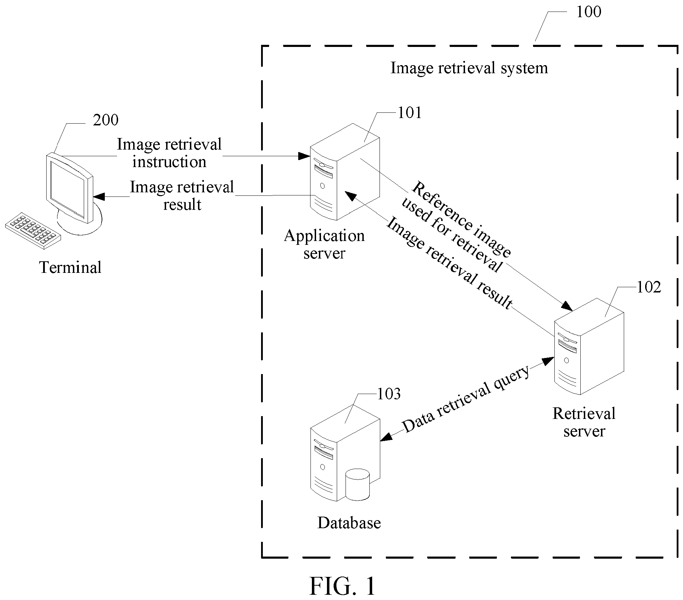

For example, FIG. 1 is a schematic diagram of a structure of a scenario to which an image retrieval method in the present disclosure is applicable.

The scenario shown in FIG. 1 includes an image retrieval system 100 and a terminal 200. The image retrieval system includes an application server 101, a retrieval server 102, and a database 103.

The terminal 200 is configured to transmit an image retrieval instruction to the application server 101 in the image retrieval system 100, the image retrieval instruction carrying a reference image used for retrieval.

Correspondingly, the application server 101 is configured to transmit, in response to the image retrieval instruction, the reference image used for retrieval to the retrieval server 102, and transmit, in response to that the retrieval server 102 returns an image retrieval result, the image retrieval result to the terminal 200. For example, the application server 101 may be a web server.

The retrieval server 102 is configured to determine, according to the reference image used for retrieval, whether an image similar to the reference image is stored in the database 103, and return the image retrieval result to the application server 101.

The database 103 stores multiple images.

In the embodiments of the present disclosure, the image may have multiple forms, such as a static form and a dynamic form. Optionally, an image may be considered as a picture.

In FIG. 1, the application server and the retrieval server being two independent servers is used as an example for description. However, in practices, in a case that a data processing amount of a network platform that provides an image retrieval service is not large, the application server and the retrieval server may alternatively be implemented into a same server.

It may be understood that the retrieval server may analyze whether two images are similar in various manners. In the embodiments of the present disclosure, description is made by using an example in which the retrieval server analyzes similarity between two images by determining a hamming distance between hash values of the two images.

The hash value of the image is also referred to as a fingerprint of the image, which is a set of hash value generated according to a feature included in the image. It can be learned that the hash value of the image is used for representing the feature of the image. The hash value of the image may be a binary code having a specified quantity of bits. The specified quantity of bits may be set as required. For example, the feature of the image is extracted to generate a 64-bit hash value as the fingerprint of the image. In the embodiments of the present disclosure, hash values of images are used as the basis for determining whether the images are similar.

In the present disclosure, the hash value representing the image may be determined in various manners. For example, the hash value of the image may be obtained by using a perceptual hash algorithm, which however is not limited in the embodiments of the present disclosure.

The hamming distance, also referred to as a code distance, means the quantity of different characters at corresponding positions of two codes. In other words, the hamming distance means the quantity of characters that need to be substituted to convert a code string into another code string.

A hash value of an image is actually a multi-bit binary code. Therefore, in the embodiments of the present disclosure, whether two images are similar may be determined according to a hamming distance between hash values (or fingerprints) of the two images. Specifically, two images may be determined as similar in response to that the hamming distance between the two images is less than a preset threshold. For example, the preset threshold may be 3.

For ease of description, in the embodiments of the present disclosure, a hamming distance between hash values of two images may be referred to as a hamming distance between two images for short.

It may be understood that, to determine similarity between two images based on the hamming distance, in the embodiments of the present disclosure, in addition to multiple images, the database further needs to store hash values respectively corresponding to the multiple images. Correspondingly, the application server or the retrieval server may calculate the hash value used for representing the feature of the reference image used for retrieval. The retrieval server may calculate, according to the hash value of the reference image and the hash values of the images in the database, the hamming distance between the reference image and each image in the database, to finally retrieve an image similar to the reference image.

However, the inventor discovers that it is relatively complex and time-consuming to calculate the hamming distance between two images. In addition, in a case that the database stores a large quantity of images, calculating the hamming distance between the reference image used for retrieval and each image in the database definitely leads to a relatively long time of image retrieval, thus affecting image retrieval efficiency. In view of this, if the quantity of hamming distances to be calculated is reduced, time consumption of image retrieval can be greatly reduced, thereby improving the image retrieval efficiency.

In addition, the inventor finds out through further study that, if the condition that a hamming distance between hash values of two images is less than a preset threshold is used as criteria for determining that the two images are similar to each other, in two similar images, there are at most R different bits in the N-bit hash values of the two images, where N represents the quantity of bits of a binary code corresponding to a hash value, and R represents the preset threshold. For example, assuming that the preset threshold R is 3, and the quantity of bits N of the hash value of the image is 64, the hash values of the two images include at most three different bits. For example, the third, the 20^{th}, and the 63^{rd} bits of the two hash values may be different.

It can be learned that, if two images are similar, after the N-bit hash value of each of the two image is split into R+1 segments in the same splitting manner to obtain R+1 hash value segments for each of the two image, at least one of the R+1 hash value segments are the same between the two images. For example, it is assumed that R is 3, and R+1 equals to 4. If an image 1 and an image 2 are similar, a hash value X of the image 1 is different from a hash value Y of the image 2 in at most three bits. If the hash value X and the hash value Y are each split into four (that is, R+1) hash value segments, the at most three different bits between the hash value X and the hash value Y can be distributed to at most three hash value segments. Therefore, at least one corresponding hash value segment is the same between the four hash value segments of the hash value X and the four hash value segments of the hash value Y.

It may be learned through the foregoing analysis that, if R+1 hash value segments corresponding to two images respectively are each different between the two images, the two images are definitely not similar; and if at least one of the R+1 hash value segments is the same between the two images, it indicates that the two images may be similar.

The foregoing description is made by using an example in which hash values of images are each split into R+1 segments. However, it may be understood that, if the condition that a hamming distance between hash values of two images is less than a preset threshold R is used as criteria for determining that the two images are similar to each other, for two similar images whose hash values are each split into a preset quantity of hash value segments, as long as the preset quantity is greater than the preset threshold, at least one of the preset quantity of hash value segments is the same between the two images.

Therefore, in the embodiments of the present disclosure, before the hamming distance between the hash value of the reference image used for retrieval and the hash value of the image in the database is calculated, the N-bit hash value of the reference image is first split into a preset quantity of hash value segments. Images in the database that have at least one same hash value segment as the reference image are queried according to the preset quantity of hash value segments of the reference image and the preset quantity of hash value segments of each of the multiple images in the database, to exclude images in the database that cannot be similar to the reference image. Time required for comparing whether two hash value segments are the same is far shorter than time required for calculating the hamming distance. In addition, the quantity of images having at least one same hash value segment as the reference image in the database is far less than the total quantity of images in the database. In this way, only hamming distances between the images obtained by the query and the reference image are calculated, which can greatly reduce the number of times of calculating the hamming distance, thereby reducing time consumed in an image retrieval process, and improving image retrieval efficiency.

It is found based on the foregoing research that, in the embodiments of the present disclosure, the database not only needs to store multiple images and an N-bit hash value of each image, but also needs to store a preset quantity (for example, R+1) of hash value segments split from the hash value of each image. N represents the quantity of bits of the hash value, and may be specifically set as required. The preset quantity is a natural number greater than the preset threshold R. For ease of description, an example in which the preset quantity is R+1 is used below. R+1 is the preset threshold R plus 1, where the preset threshold R is set in advance, and a hamming distance between two similar images needs to be less than the preset threshold.

For ease of understanding, a process of splitting a hash value of an image into R+1 hash value segments is described first.

In the process of splitting an N-bit hash value of an image into R+1 hash value segments, values of N bits in the N-bit hash value are split into multiple segments according to a sequence of the bits in the N-bit hash value, and each split segment is referred to as a hash value segment. It may be understood that, each hash value segment includes a value of at least one bit in the hash value.

According to different actual requirements, the quantities of bits included in the R+1 hash value segments of the N-bit hash value of each image may be the same or may be different. It is only required that hash values of different images are split in the same hash value splitting manner, so that for different images, the quantities of bits included in hash value segments at corresponding positions are the same.

For example, a hash value has 64 bits and R+1 is 4. In this case, for the hash value of any image, the hash value may be evenly split into four hash value segments, and each hash value segment includes 16-bit data. In this way, hash value segments of different images all include 16-bit data. Alternatively, the first 8 bits of the hash value may be used as the first hash value segment, the ninth to the 32^{nd} bits of the hash value are used as the second hash value segment, the 33^{rd} to the 40^{th} bits are used as the third hash value segment, and the 41^{st} to the 64^{th} bits are used as the fourth hash value segment. In this way, for any two images, the quantity of bits included in the first hash value segment is the same between the two images. Correspondingly, the quantities of bits included in the second, the third, and the fourth hash value segments are also the same between the two images.

It may be understood that, for ease of splitting, evenly splitting the N-bit hash value into R+1 hash value segments is a preferred implementation. If N can be exactly divided by R+1, the quantity of bits included in each hash value segment is the same one to another. For example, if the hash value has 64 bits, and R+1 is 4, each hash value segment includes 16 bits of values. If N cannot be exactly divided by R+1, a difference between the quantities of bits included in different hash value segments is set to be no more than one. For example, if the hash value has 64 bits, and R+1 is 5, the first four hash value segments each include 13 bits of values, and the last hash value segment includes 12 bits of values.

The foregoing describes a process of splitting the hash value of an image into hash value segments. It may be understood that, for an image to be stored in the database, after the N-bit hash value of the image is split into R+1 hash value segments, the image, the N-bit hash value of the image, and the R+1 hash value segments corresponding to the image may be stored associatively, to provide a basis for subsequent image retrieval. For example, in an implementation, when an image is stored in the database, the N-bit hash value and the R+1 hash value segments of the image are stored associatively with the image.

Considering that a relatively large quantity of images are stored in the database, if the R+1 hash value segments corresponding to the reference image used for retrieval are compared with hash value segments at corresponding positions (same sequence positions) of all images in the database, the number of times of comparison is relatively large, which requires a long period of time. To further reduce time required for retrieval, in the embodiments of the present disclosure, in addition to storing images and hash values of the images into the database, multiple hash tables are further generated according to the quantity of hash value segments of each image. Each hash table is used for recording information of hash value segments at the same position of different images.

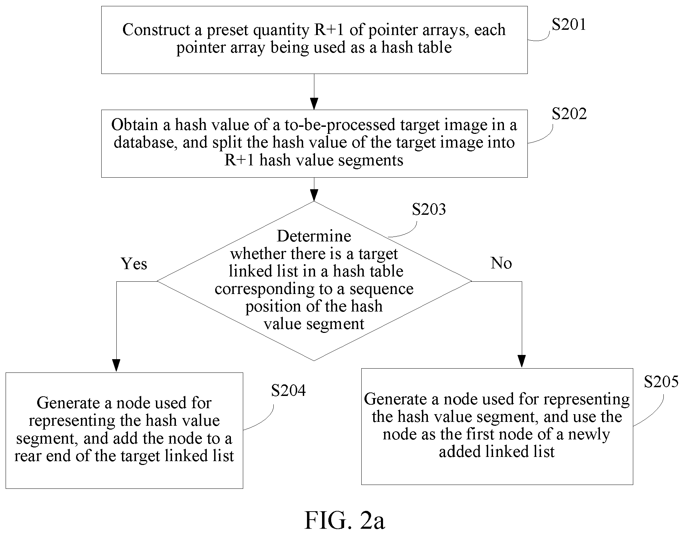

For example, FIG. 2a is a schematic flowchart of generating a hash table for storing hash value segments according to an embodiment in the present disclosure. The process may be performed by the application server or the retrieval server, and the process may include the following steps S201 to S205.

In step S201, a preset quantity (which is R+1) of pointer arrays are constructed, each pointer array being used as a hash table.

R+1 represents a preset quantity, and the preset quantity is the foregoing preset threshold R plus 1, where R represents the hamming distance mentioned above.

A length of the pointer array may be set as required. For example, a pointer array with a length of 2¹⁶ may be used.

In this embodiment, each pointer array, as a hash table, is used for storing hash value segments at a specific sequence position split from hash values of images. For example, assuming that the hash value of each image is split into four hash value segments, it indicates that the hash value of the image has four sequentially connected hash value segments. The four hash value segments have different sequence positions, namely the first hash value segment, the second hash value segment, the third hash value segment, and the fourth hash value segment in sequence. Correspondingly, four hash tables need to be constructed, to respectively record the first, the second, the third, and the fourth hash value segments.

In step S202, a hash value of a to-be-processed image in a database is obtained, and the hash value of the image is split into R+1 hash value segments.

Each hash value segment corresponds to a sequence position in the hash value of the image, and different hash value segments in the hash value have different sequence positions. The sequence position of the hash value segment represents a sequence position of the hash value segment in the hash value to which the hash value segment belongs, and is also a sequence position of the hash value segment in the multiple consecutive hash value segments. For example, a hash value segment is the second hash value segment in the hash value according to a positive sequence, and the sequence position of the hash value segment is correspondingly the second position.

A hash value of an image may be obtained by extracting a feature of the image. How to extract the hash value of the image is not limited in the present disclosure. For a process of splitting a hash value of an image into hash value segments, one may refer to the foregoing related descriptions, and details are not described herein again.

Step S202 may include: in response to that the database has stored the image and the hash value of the image, obtaining the hash value of an image that has been stored in the database, splitting the hash value, and generating a hash table according to the split hash value segments; or in response to that an image to be stored in the database is obtained, generating a hash value of the image first, splitting the hash value to obtain hash value segments, and storing the image, the hash value of the image, and the hash value segments of the image into the database.

In step S203, for each hash value segment, a hash table is determined according to the sequence position of the hash value segment in the hash value, and it is determined, in the hash table, whether there is a linked list used for recording the hash value segment. If there is the linked list used for recording the hash value segment in the hash table, step S204 is performed, and if there is no linked list used for recording the hash value segment in the hash table, step S205 is performed.

The hash table corresponding to the sequence position is used for storing information of hash value segments at the sequence position in hash values of different images. For example, if the hash value segment is determined to be the second hash value segment in the hash value of the image according to the sequence position of the hash value segment, a hash table used for storing the second hash value segment is determined.

The pointer array represented by each hash table stores at least one linked list. Each linked list includes multiple nodes (also referred to as knots). Each node records a hash value segment, and may further record image information of an image to which the hash value segment belongs, such as an identifier of an image to which the hash value segment belongs or a hash value of an image to which the hash value segment belongs. Hash value segments stored in different nodes in the same hash table belong to different images. Certainly, the node further has a pointer that points to a next node in the linked list.

In this embodiment in the present disclosure, different nodes in a same linked list are respectively used for storing hash value segments at the same sequence position in hash values of different images, and hash value segments in different nodes in the same linked list are the same. In this way, when subsequently searching for, from the hash table, hash value segments same as a to-be-searched hash value segment, a linked list including the hash value segment can be directly determined. All images, whose hash value segments at the corresponding sequence position are the same as the hash value segment, can be directly found according to image information included in the nodes in the linked list.

Correspondingly, after the hash table corresponding to the sequence position is determined, it is necessary to determine, in the hash table, whether there is a linked list used for recording the hash value segment, so that the hash value segment of the image is subsequently recorded into a node of the linked list. In this way, all hash value segments at a corresponding sequence position in hash values of different images are classified.

It may be understood that, for ease of distinguishing, an index may be constructed for each linked list, and the index is used for representing content of a hash value segment recorded in each node of the linked list. For example, the index may be a hash value segment stored in a node of the linked list. Certainly, the hash value segment in the first node of the linked list may be directly used as the index of the linked list.

In step S204, a node used for representing the hash value segment is generated, and the node is added to a rear end of the linked list.

To implement classification, if the linked list used for recording the hash value segment exists, a node including the hash value segment may be generated, and the node is added to the rear end of the linked list.

In step S205, a node used for representing the hash value segment is generated, and the node is used as the first node of a newly added linked list in the hash table.

Correspondingly, if there is no linked list used for recording the hash value segment, it indicates that the hash table currently has not stored a hash value segment that is the same as the hash value segment. In this case, a linked list used for recording the hash value segment may be created, that is, the generated node that includes the hash value segment is used as the first node of a linked list.

By using step S202 to step S205, information of hash value segments of an image may be stored into hash tables, to obtain hash tables respectively used for storing hash value segments in different sequence positions of the hash values of the images.

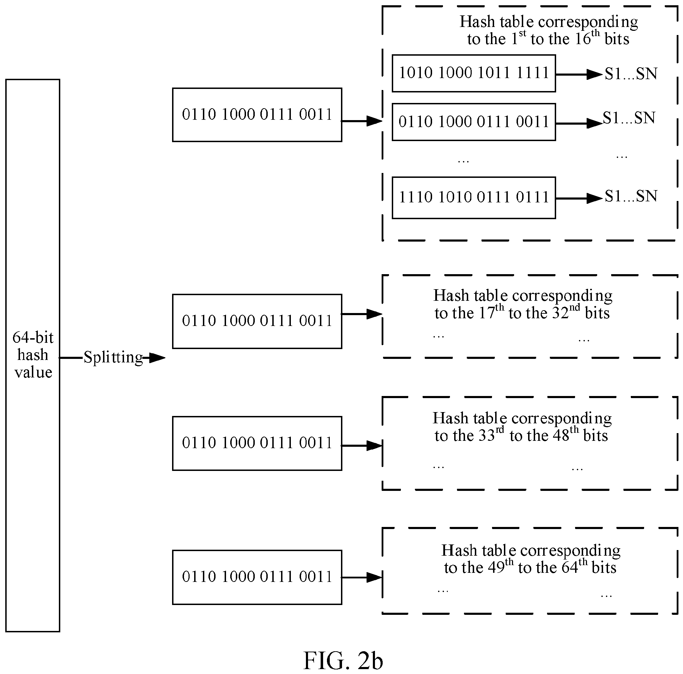

For ease of understanding the process in FIG. 2a, the foregoing process is illustrated with an example in the following. It is assumed that a hash value of an image has 64 bits, and the hash value of the image is split into four segments to obtain four hash value segments. FIG. 2b shows an example of storing the four hash value segments split from the hash value of the image into hash tables.

As shown in FIG. 2b, it is assumed that the 64-bit hash value of the image is 110 1000 0111 0011 1001 0110 1110 1010 1111 0001 1100 1001 1110 0001 0001 1111. The first hash value segment split from the hash value of the image is 0110 1000 0111 0011, the second hash value segment is 1001 0110 1110 1010, the third hash value segment is 1111 0001 1100 1001, and the fourth hash value segment is 1110 0001 0001 1111.

Correspondingly, the first hash value segment of the image needs to be stored into a corresponding hash table used for storing hash value segments formed by the first 1-16 bits. As shown in FIG. 2b, the first hash table is represented as a hash table marked with first 1-16 bits.

Further, it further needs to detect whether the hash table has a linked list used for storing "0110 1000 0111 0011". In FIG. 2b, a specific value of a hash value segment stored in a linked list is used as an index of the linked list. For example, referring to FIG. 2b, each row in the first hash table is a linked list. In this way, a linked list with an index of "0110 1000 0111 0011" may be directly found, for example, the linked list pointed by an arrow from the first hash value segment of the image in FIG. 2b. Correspondingly, a node used for storing the first hash value segment is generated for the image. In addition, related information of the image, such as the hash value of the image and a storage location of the image in the database, is stored in the node, and the node is added to the found linked list. Certainly, if no linked list with an index of "0110 1000 0111 0011" is found, the node may be used independently as a linked list, and details are not described herein again.

It may be understood that, in the hash table corresponding to the 1^{st} to the 16^{th} bits shown in FIG. 2b, S1...SN represent nodes in each linked list. Each linked list may include multiple nodes, and the quantities of nodes included in the linked lists may be the same, or may be different.

It may be understood that, in FIG. 2b, linked lists in the second to the fourth hash tables are not clearly drawn. However, the second, the third, and the fourth hash value segments of the image may be stored into the second, the third, and the fourth hash tables respectively, specific processes of which are similar to the process of storing the first hash value segment, and are not described in details herein again.

It may be understood that, in the process in FIG. 2a, description is made by using an example in which in a hash table corresponding to any sequence position, information of different images having the same hash value segment at the sequence position is stored into a same linked list. However, it may be understood that, this embodiment may also be implemented as constructing only hash tables corresponding to different sequence positions, to respectively store hash value segments at different sequence positions of hash values of images and related information. For example, in step S203, after the hash table corresponding to the sequence position is determined, the hash value segment and the image to which the hash value segment belongs may be stored into the hash table corresponding to the sequence position.

In this embodiment, description is made by using an example in which each hash table is a pointer array. However, it may be understood that, this embodiment is also applicable to the case of storing the hash table in another data storage form. For example, each hash table may alternatively be considered as a folder, and the folder stores one or more subsequent linked lists.

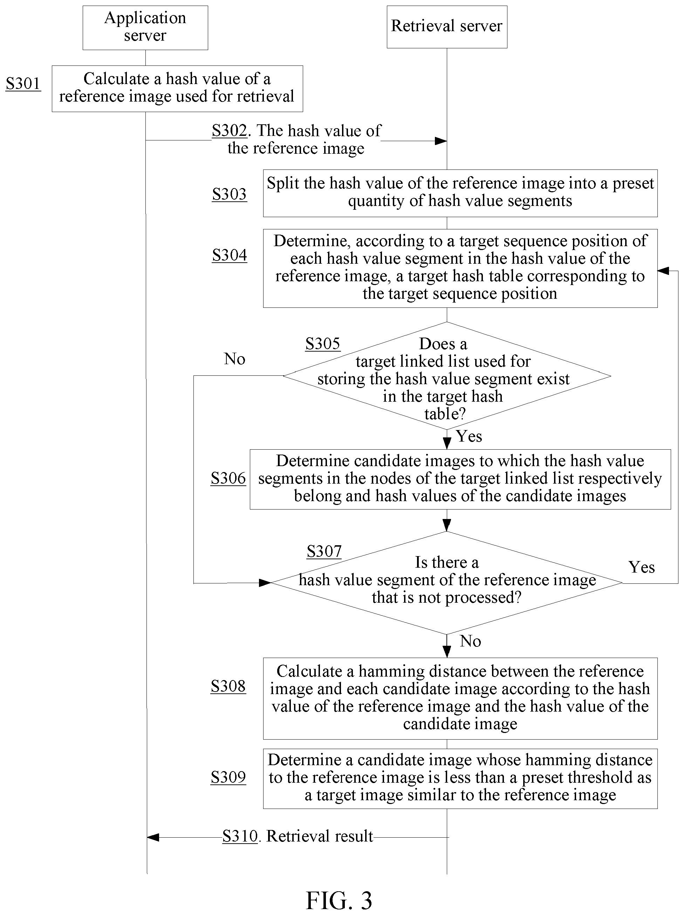

The image retrieval method in the embodiments of the present disclosure is described with reference to the foregoing features. FIG. 3 is a schematic flowchart of an image retrieval method according to an embodiment of the present disclosure. The method in this embodiment may include the following steps S301 to S310.

In step S301, an application server obtains a reference image used for retrieval, and calculates a hash value of the reference image.

For example, the application server may receive an image retrieval instruction transmitted by a client, the image retrieval instruction carrying the image used for retrieval. For another example, the application server obtains an image used for retrieval, from a specified storage space. Certainly, for different scenarios, the image used for retrieval may be obtained by the application server in different manners.

In this embodiment in the present disclosure, for ease of distinguishing, the image used for retrieval is referred to as a reference image. The hash value of the reference image is a binary code representing an image feature of the reference image.

In step S302, the application server transmits the hash value of the reference image to a retrieval server.

For example, the application server transmits a retrieval request to the retrieval server, the retrieval request carrying the hash value of the reference image.

In step S303, the retrieval server splits the hash value of the reference image into a preset quantity of hash value segments.

Each hash value segment includes a value of at least one bit, and the preset quantity of hash value segments can form the hash value of the reference image.

For a process of splitting the hash value of the reference image into the preset quantity of consecutive hash value segments, one may refer to the process of splitting a hash value of an image described above, and details are not described herein again.

In the embodiment of FIG. 3, description is made by using an example in which the application server calculates the hash value of the reference image used for retrieval. However, it may be understood that the application server may alternatively directly transmit the reference image to the retrieval server, and the retrieval server determines the hash value of the reference image.

In step S304, for one of the hash value segments split from the hash value of the reference image, the retrieval server obtains, according to a target sequence position of the hash value segment in the hash value of the reference image, a target hash table corresponding to the target sequence position.

In this embodiment in the present disclosure, for ease of distinguishing, a sequence position of a currently processed hash value segment is referred to as a target sequence position.

It may be understood that in step S304, the target hash table may be retrieved from a database. On the premise that the retrieval server caches hash tables, the target hash table may alternatively be retrieved from the hash tables cached by the retrieval server.

In step S305, the retrieval server determines whether a target linked list used for storing the hash value segment exists in the target hash table. If the target linked list used for storing the hash value segment exists in the target hash table, step S306 is performed, and if the target linked list used for storing the hash value segment does not exist in the target hash table, step S307 is performed.

Considering the complexity of images in the database, generally, each hash table includes at least two linked lists.

A hash value segment stored in each node of the target linked list is the same as the hash value segment corresponding to the reference image.

In step S306, the retrieval server determines, for each node of the target linked list, a candidate image to which the hash value segment in the node of the target linked list belongs and a hash value of the candidate image.

It may be understood that, if the target linked list is detected, it indicates that an image, whose hash value segment in the target sequence position is the same as the hash value segment of the reference image in the target sequence position, exists in the database. For ease of distinguishing, an image corresponding to the hash value segment in each node of the target linked list is referred to as a candidate image. It may be understood that, hash value segments in at least one sequence position of the candidate image and the reference image are the same. Therefore, the candidate image may be an image similar to the reference image.

The hash value of the candidate image may be determined by obtaining the hash value of the determined candidate image from the database. If the node stores the hash value of the candidate image, the hash value of the candidate image may be obtained directly from the node.

In step S307, the retrieval server determines whether there is another one of the multiple hash value segments corresponding to the reference image that has not been used for obtaining the corresponding hash table. If there is another one of the multiple hash value segments corresponding to the reference image that has not been used for obtaining the corresponding hash table, the process returns to step S304, to determine a target hash table according to a target sequence position of the hash value segment that has not been used for retrieving.

It may be understood that, for a hash value segment in a certain sequence position of the reference image, if a corresponding target linked list is not found from a corresponding target hash table, it indicates that there is no image having the hash value segment at the sequence position in the database. In this case, it may be determined whether other hash value segments corresponding to the reference image are all retrieved, to determine whether the retrieve is finished for all hash value segments of the reference image.

It may be understood that steps S304, S305, and S306 need to be performed for each hash value segment. Moreover, the retriever for the hash value segments may be sequentially performed, or may be concurrently performed.

It may be understood that in practices, step S307 may not be performed after S305 and S306. Instead, subsequent step S308 may be directly performed if the candidate image is retrieved. For example, if the target linked list corresponding to a hash value segment is not found in step S305, processing of the hash value segment may be ended, but processing of obtaining a target linked list for another hash value segment is still performed. For another example, in a case that the retrieve for the hash value segments of the reference image are performed concurrently, since the retrieve for the hash value segments are performed at the same time, step S307 is not necessary.

This embodiment is also applicable to the case of directly storing, in a hash table corresponding to a certain sequence position, hash value segments of different images in the sequence position. Correspondingly, after the target hash table is determined in step S304, it may be determined whether a candidate hash value segment that is the same as the hash value segment of the reference image exists in the target hash table, to subsequently determine a candidate image to which the candidate hash value segment belongs and a hash value of the candidate image.

In this embodiment in the present disclosure, for ease of distinguishing between the hash value of the reference image and the hash value of the candidate image, the hash value of the reference image may also be referred to as a first hash value, and the hash value segment split from the first hash value is referred to as a first hash value segment. The hash value segment that is obtained from the hash table and that is the same as the first hash value segment is referred to as a second hash value segment. That is, the hash value of the candidate image is referred to as a second hash value, and the hash value segment split from the second hash value is referred to as the second hash value segment.

In step S308, the retrieval server calculates, according to the hash value of the reference image and the hash values of the candidate images, a hamming distance between the reference image and each candidate image.

It may be understood that the hamming distance is the quantity of different characters at the same position between hash values of two images. In the present disclosure, the hamming distance may be calculated in multiple manners, which is not limited herein.

It may be understood that multiple candidate images may be found according to a hash value segment of the reference image. Therefore, in step S308, the hamming distance between the reference image and each found candidate image is calculated.

In step S309, the retrieval server determines a candidate image whose hamming distance to the reference image is less than a preset threshold as a target image similar to the reference image.

It may be understood that, in steps S303 to S307, the candidate images that may be similar to the reference image are determined from the database based on a principle of determining similarity between two images according to a hamming distance. After the candidate images are determined, the target image similar to the reference image may be retrieved according to the method in steps S308 and S309. The target image similar to the reference image may alternatively be retrieved from the determined candidate images in another manner, which is not limited herein.

A same candidate image may be found repeatedly according to different hash value segments of the reference image. For example, if the hash value of the reference image is completely the same as the hash value of the candidate image, the reference image can be found according to each hash value segment split from the hash value of the reference image. To avoid repeated operations, after all candidate images are determined, repeated candidate images may be removed first. Alternatively, if a hamming distance between the candidate image and the reference image is calculated, when the candidate image is found again subsequently, the hamming distance is not calculated repeatedly.

In step S310, the retrieval server feeds back a retrieval result to the application server according to the target image similar to the reference image.

For example, the target image similar to the reference image is transmitted to the application server, or a quantity of the target images similar to the reference image (related information such as an image source may be further included) is transmitted to the application server.

It may be learned that, on the premise that two images are determined to be similar based on the principle that a hamming distance between the two images is less than a preset threshold, if the hash values of each of the two images is split into a quantity of hash value segments, the quantity being a preset threshold plus 1 (or plus any natural number not less than 1), at least one hash value segment is completely the same between the two images. Based on this principle, in this embodiment in the present disclosure, after the hash value of the reference image used for retrieval is obtained, the hash value of the reference image is first split into the preset quantity of consecutive hash value segments. Then, according to the sequence position of each hash value segment in the hash value of the reference image, candidate images having the same hash value segment in the sequence position are retrieved, so that the candidate images that may be similar to the reference image can be selected from the database, and other images that cannot be similar to the reference image are excluded. A data processing amount of retrieving images that have the same hash value segment in the same sequence position is relatively small, and can nearly be ignored compared with a calculation amount of calculating the similarity. In addition, the data amount of the selected candidate images is greatly less than the data amount of all images in the database. In this way, the target image may be determined by calculating only the similarities between the reference image and a relatively small quantity of candidate images, thereby greatly reducing the calculation amount of image retrieval and improving image retrieval efficiency.

In addition, the same hash table stores hash value segments in the same sequence position of hash values of different images, and information of different images having the same hash value segment in the sequence position is respectively stored into nodes in a same linked list. Therefore, according to a hash value segment of the reference image, all candidate images each having the hash value segment in the sequence position that is the same as the hash value segment in the sequence position of the reference image can be directly found, thereby further reducing time consumed by selecting the candidate images.

For ease of understanding the beneficial effects of the present disclosure, description is made by using an example.

Assuming that a database stores hash values of 100 million images, if hamming distances between a reference image and each image in the database is calculated sequentially, the hamming distance needs to be calculated for 100 million times.

It is assumed that each hash value has 64 bits, and two images are considered to be similar in a case that the hamming distance is less than 3. According to the solution of the present disclosure, the hash value of each image is split into four 16-bit hash value segments, and the hash value segments are respectively stored into four hash tables. In addition, in each hash table stores, identical hash value segments that belong to different images are stored in the form of a linked list. Therefore, after the hash value of the reference image is split into four hash value segments, for selecting candidate images, the retrieve is performed merely based on each 16-bit hash value segment to find candidate image represented by each node in the linked list, which has a complexity of time consumption of 0(1). Time consumption of image retrieval mainly depends on the number of times of calculating the hamming distance between the reference image and the candidate image represented by each node in the linked list. For example, each linked list in the hash table is a pointer array with a length of 2¹⁶, which includes 65536 bits. Because each hash table needs to store one hash value segment in hash values of each of the 100 million images, a maximum length of each linked list is 100 million/65536=1526 nodes. Because the reference image corresponds to four hash value segments, at most four linked lists will be searched. Therefore, a maximum number of times of calculating the hamming distance is 1526*4 = 6104, which is far less than 100 million times, leading to a greatly improved retrieval efficiency.

In the foregoing embodiment in the present disclosure, description is made by using an example in which the retrieval server is a single server. However, to adapt to an image retrieval scenario with relatively large data processing amount and improve image retrieval efficiency, in practices, the retrieval server may alternatively be replaced with a distributed system formed by multiple retrieval servers. In a case that a server cluster formed by multiple retrieval servers is used, an operation of the server cluster is similar to that of a single retrieval server, except each retrieval server is responsible for retrieving different images. However, the process of retrieving each image is the same.

It may be understood that, because multiple hash value segments split from the hash value of each image is stored into multiple hash tables, and each hash table further needs to store information of the image, the retrieval server needs to load a relatively large amount of data into the memory. For example, if a node stores a hash value segment and related information of an image to which the hash value segment belongs, each node may need to occupy a space of 64-bit, and thus 100 million images need a space of 6.4 G. If a single retrieval server is used, the memory of the retrieval server may be insufficient, and once a fault occurs, the retrieval service cannot be provided. However, if a distributed cluster formed by multiple retrieval servers is used, probability of occurrence of insufficient memory can be reduced, and stability of the retrieval service can be improved.

To allocate a retrieval task to retrieval servers in the server cluster more properly, in an embodiment in the present disclosure, the retrieval server cluster may include at least one master server and multiple slave servers.

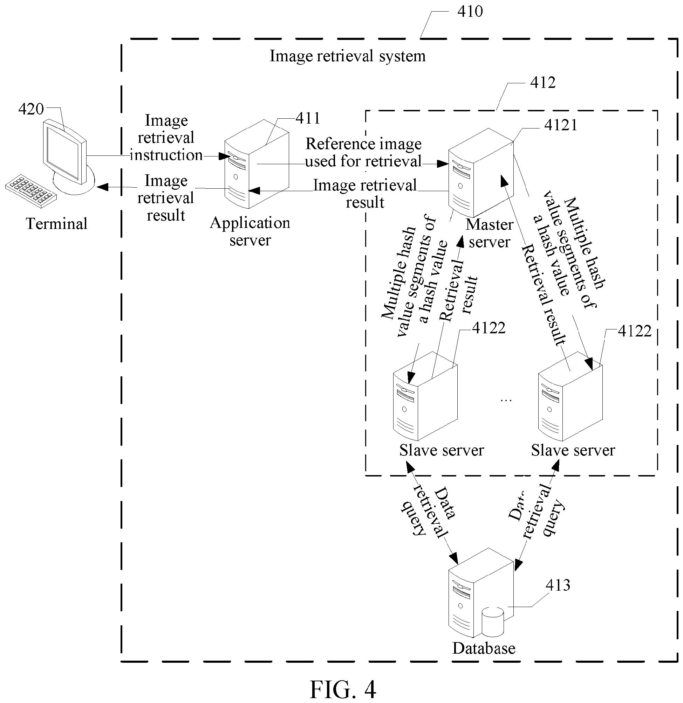

For example, FIG. 4 is a schematic diagram of a structure of another scenario to which an image retrieval method in the present disclosure is applicable.

The scenario in this embodiment in the present disclosure includes an image retrieval system 410 and a terminal 420. The image retrieval system includes an application server 411, a retrieval server cluster 412, and a database 413.

The retrieval server cluster 412 includes a master server 4121 and multiple slave servers 4122.

The master server 4121 may allocate a retrieval task to the multiple slave servers 4122, to complete retrieval corresponding to the retrieval task by using the multiple slave servers 4122.

The master server 4121 may allocate the retrieval task to the slave server 4122 in multiple manners.

In a possible implementation, the master server 4121 may configure, for each slave server 4122, a storage area of the database as the range of retrieval to be performed by the slave server 4122, to logically assign storage areas of the database to the multiple slave servers 4122. Correspondingly, when performing the retrieval task, the slave server 4122 performs retrieval only in the assign storage area of the database.

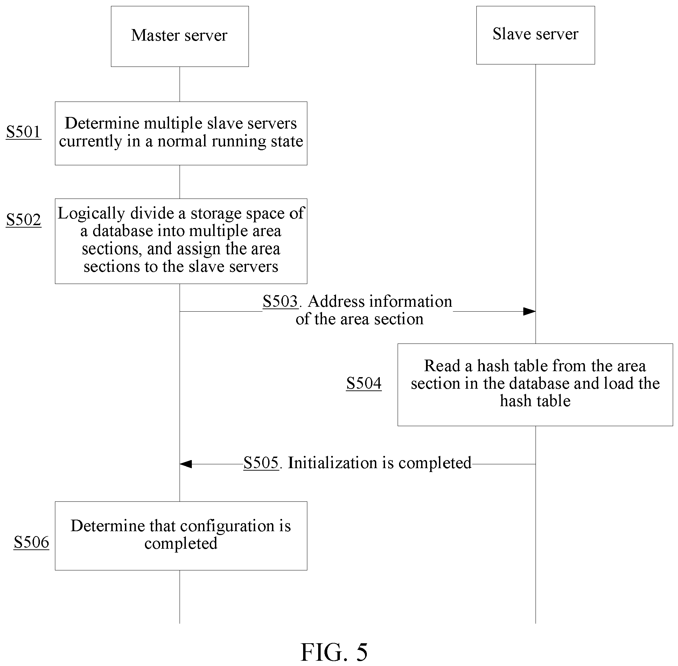

For ease of understanding, a configuration procedure of configuring the slave server 4122 by the master server 4121 is described first. For example, referring to FIG. 5, the configuration procedure may include the following steps S501 to S506.

In step S501, a master server determines multiple slave servers currently in a normal running state.

For example, the master server may detect, based on a heartbeat mechanism, whether each slave server runs normally (also referred to as "in a living state"). For example, the master server may periodically transmit heartbeat messages to all the slave servers, and each slave server correspondingly feeds back a heartbeat response message to the master server if receiving the heartbeat message. In this way, if receiving the heartbeat response message from the slave server, the master server can determine that the slave server is in a normal running state.

Correspondingly, the master server may store a file used for recording a running state of each slave server, to determine each slave server currently in a normal running state according to the file.

In step S502, the master server logically divides storage space of a database into multiple area sections, and assigns the multiple area sections to the multiple slave servers, so that each slave server in a normal running state is responsible for retrieving in at least one area section.

The storage space of the database may be all storage space, or may be storage space stored with data in the database. In this embodiment in the present disclosure, the storage space of the database is divided into multiple small storage spaces, and each small storage space is referred to as an area section. The area sections may have the same size or different sizes of storage space.

For example, the master server divides, according to a total quantity of the multiple slave servers in the normal running state, the storage space of the database into the total quantity of area sections, and assigns the area sections respectively to the slave servers. In this way, each slave server is responsible for retrieving in one of the area sections in the database.

For another example, the master server may divide the multiple slave servers into multiple groups of servers, and each group of servers includes at least two slave servers. In this way, the master server may divide, according to a quantity of slave servers in each group of servers, the storage space of the database into area sections whose quantity is equal to the quantity of slave servers in each group, and assign the divided area sections respectively to the servers in the server group.

Certainly, there may be another possible manner of configuring the area section for the slave server, which is not limited herein.

It may be understood that, the master server may further store a configuration file of each slave server, to be used for assigning an area section to each slave server. The configuration file may record parameters such as memory space and performance of the slave server. In this way, when assigning the area section of the database to the slave server, the size of the storage space corresponding to the area section assigned to the slave server may be determined with reference to the parameters of the slave server.

In step S503, the master server transmits to the slave server address information of the area section assigned to the slave server for retrieval.

For example, the master server assigns an area section with addresses of 0 to 10 in the storage space of the database to one slave server, and assigns an area section with addresses of 11 to 20 to another slave server, and so on. Correspondingly, for the slave server to which the area section with the addresses of 0 to 10 is assigned, the master server may transmit, to the slave server, information about the addresses of 0 to 10 corresponding to the area section that is assigned to the slave server.

In step S504, the slave server reads, from the database according to the address information of the assigned area section, a hash table in the area section in which the slave server is responsible for retrieval, and loads the obtained hash table to memory of the slave server.

It may be understood that, after obtaining the address information of the assigned area section, the slave server may obtain the hash table stored in the area section, and load the hash table to the memory to complete initialization of the hash table. In this way, the slave server may directly query the hash table cached in the memory subsequently, to reduce the number of times of accessing the database.

Certainly, in practices, the slave server may not perform step S504. Instead, after receiving a to-be-retrieved hash value segment instructed by the master server, the slave server queries a corresponding hash table from the area section in the database according to the hash value segment.

IN step S505, the slave server transmits an initialization completion message to the master server when completing hash table loading.

In step S506, the master server determines, when determining that initialization completion messages respectively transmitted by the multiple slave servers are received, that configuration of the slave servers is completed.

The foregoing steps S505 and S506 are performed to help the master server learn a configuration progress, to ensure that all the slave servers complete configuration.

It may be understood that, after the master server determines that configuration of the slave servers is completed, to ensure stability of the retrieval system, the master server may still monitor whether a running state of each slave server is normal. For example, the master server may monitor the running state of each slave server by using the heartbeat mechanism mentioned above. When detecting that a running exception (for example, a breakdown) occurs in a slave server, the master server first determines an area section in which the slave server is responsible for retrieval. Then the master server assigns the determined area section to at least one slave server other than the abnormal slave server, to ensure stability of the retrieval system.

For example, the determined area section is evenly assigned to other slave servers that do not have an exception, so that the storage spaces of the area sections assigned to other servers are increased. After obtaining the area section newly assigned by the master server, the slave servers may also perform an operation as the foregoing step S504.

It may be understood that, after determining that configuration of the slave servers is completed, the master server may receive a reference image used for retrieval or a hash value of the reference image transmitted by the application server.

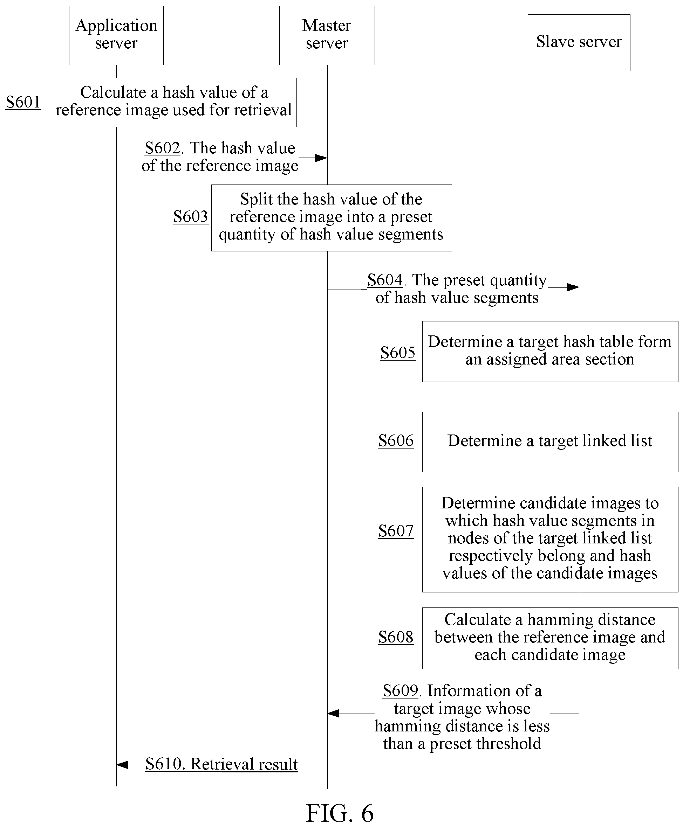

For example, FIG. 6 is a schematic flowchart of another embodiment of another image retrieval method according to the present disclosure. The method in this embodiment is described by using an example in which image retrieval is implemented by a retrieval server cluster. This embodiment may include the following steps step S601 to 5610.

In step S601, an application server obtains a reference image used for retrieval, and calculates a hash value of the reference image.

In step S602, the application server transmits the hash value of the reference image to a master server in a retrieval server cluster.

Similar to the foregoing embodiment, the application server may directly transmit the reference image to the master server, and the master server calculates the hash value of the reference image. Certainly, in practices, the application server and the master server may alternatively be implemented as a same server.

In step S603, the master server splits the hash value of the reference image into a preset quantity of hash value segments.

It may be understood that, the hash value of the reference image may also be referred to as a first hash value, and the hash value segments split from the hash value of the reference image may also be referred to as first hash value segments.

For details of steps S601 to S603, one may refer to the related description in the foregoing embodiment, which is not described herein again.

In step S604, the master server transmits the preset quantity of hash value segments corresponding to the reference image to each slave server.

It may be understood that, each slave server is responsible for retrieval in an area section corresponding to a storage space of a database. Therefore, by transmitting the preset quantity of hash value segments to the multiple slave servers, searching may be performed in different area sections of the database concurrently by using the multiple slave servers, thereby improving search efficiency.

In step S605, for each hash value segment corresponding to the reference image, the slave server determines, according to a target sequence position of the hash value segment in the hash value of the reference image, a target hash table corresponding to the target sequence position from an area section of a database in which the slave server is responsible for retrieval.

It may be understood that, because each slave server is responsible for retrieval in one area section of the database, each slave server performs retrieval only in the area section for which the slave server is responsible for retrieval, to obtain the target hash table stored in the area section and corresponding to the target sequence position. The process is similar to the process of obtaining a target hash table mentioned above, except that a retrieval range of each slave server in the database is decreased.

Certainly, in practices, a target hash table corresponding to a target sequence position of a hash value segment may not exist in an area section in which a slave server is responsible for retrieval, which indicates that the slave server is not responsible for retrieving the target hash table, and instead another slave server is responsible for retrieving the target hash table. In this case, the slave server may ignore the retrieval of candidate images corresponding to the hash value segment, and may continue to determine whether a target hash table corresponding to another hash value segment exists.

In this embodiment, description is made by using an example in which the slave server queries the database in real time for a target hash table. In practices, if the slave server loaded a hash table corresponding to an area section when the master server assigned the area section to the slave server, the slave server may directly determine, from the hash table cached in the memory (that is, hash tables belonging to the area section), whether there is a target hash table.

In step S606, the slave server obtains, from the target hash table, a target linked list used for storing the hash value segment.

In step S607, the slave server determines a candidate image to which a hash value segment in each node of the target linked list belongs and a hash value of the candidate image.

For example, the slave server queries, from the node, a storage address of the candidate image to which the hash value segment belongs, and then queries, from the database, the candidate image and the hash value of the candidate image according to the storage address.

For details of steps S606 and S607, one may refer to specific implementations of related operations performed by the retrieval server in the foregoing embodiments, which are not described herein again.

For ease of distinguishing, the hash value segment in each node of the target linked list may also be referred to as a second hash value segment.

It may be understood that, the foregoing description is made by using an example in which a hash table includes a linked list. In a case that the hash table directly stores information of each hash value segment and candidate images, the slave server may alternatively directly determine, from the target hash table, the second hash value segments that are the same as the corresponding hash value segment of the reference image, and information of candidate images to which the second hash value segments respectively belong. For a specific process, reference may be made to the related description in the foregoing embodiments.

In step S608, the slave server calculates, according to the hash value of the reference image and the hash values of the candidate images, a hamming distance between the reference image and each candidate image.

The operations of the slave server in steps S605 to S608 may be similar to the operation process of the foregoing single retrieval server, and details are not described herein again.

Certainly, in practices, because there are a relatively large quantity of slave servers, calculating the hamming distances by using the slave servers can improve calculation efficiency. However, after obtaining the candidate images, the slave servers may alternatively transmit the hash values of the found candidate images to the master server, so that the master server calculates the hamming distance between the reference image and each candidate image.

In step S609, the slave server determines, from the candidate images, a target image whose hamming distance to the reference image is less than a preset threshold, and transmits information of the target image to the master server.

In step S610, the master server feeds back a retrieval result to the application server according to information of the target images returned from different slave servers.

For example, the master server transmits, to the application server, all the information of the target images returned from the slave servers, or transmits, to the application server, the total quantity of the target images returned from the slave servers. Alternatively, the master server may transmit sources, identifiers, and the total quantity of the target images to the application server. Certainly, the retrieval result may be fed back in other manners, which are not limited in the present disclosure.

According to another aspect of the present disclosure, corresponding to the image retrieval method in the present disclosure, an image retrieval apparatus is further provided.

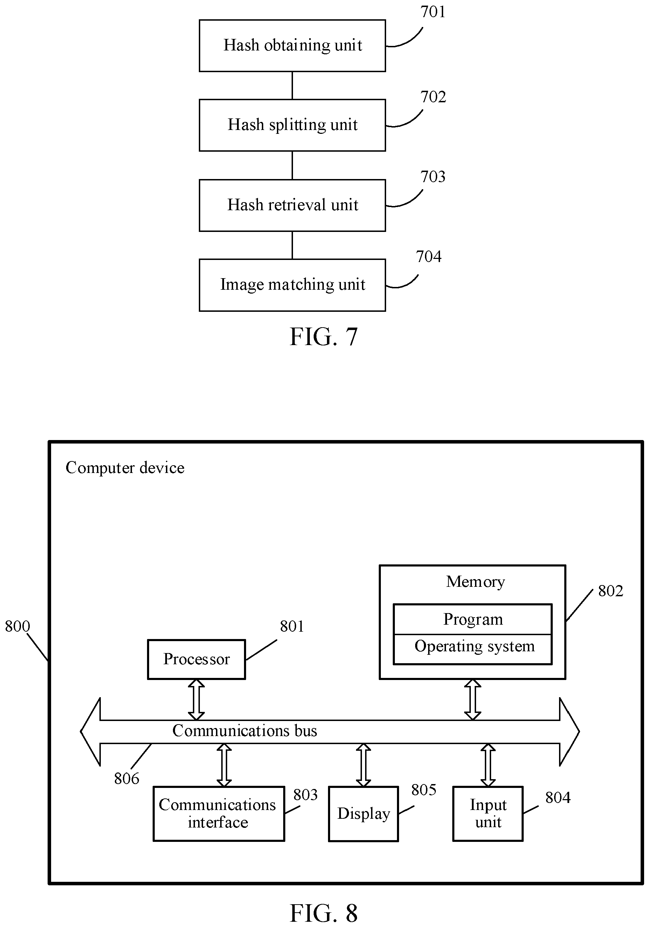

For example, FIG. 7 is a schematic diagram of a structure of an image retrieval apparatus according to an embodiment of the present disclosure. The apparatus in this embodiment may be applied to the retrieval server or the retrieval server cluster mentioned above. The apparatus may include:
a hash obtaining unit 701, configured to obtain a first hash value of a reference image used for retrieval, where the first hash value represents an image feature of the reference image;
a hash splitting unit 702, configured to split the first hash value into a preset quantity of first hash value segments having different sequence positions in the first hash value;
a hash retrieval unit 703, configured to, for each of the first hash value segments, obtain a target hash table according to the sequence position of the first hash value segment, and retrieve, from hash value segments in the target hash table, second hash value segments that are the same as the first hash value segment, where the target hash table is used for storing hash value segments, which are at the sequence position of the first hash value segment, in hash values of images; and
an image matching unit 704, configured to retrieve, from candidate images to which the second hash value segments respectively belong, a target image similar to the reference image.

In a possible implementation, the image matching unit may include:
a hash determining unit, configured to obtain second hash values of the candidate images to which the second hash value segments respectively belong, where the second hash values respectively represent the image feature of the candidate images;
a distance calculation unit, configured to calculate a hamming distances between each of the candidate images and the reference image according to the first hash value of the reference image and the second hash values of the candidate images; and
a distance matching unit, configured to retrieve, from the candidate images to which the second hash value segments respectively belong, the target image whose hamming distance to the reference image is less than a preset threshold.

In a possible implementation, the target hash table obtained by the hash retrieval unit stores at least one linked list, each node in each linked list is used for storing a hash value segment, which is at the sequence position of the first hash value segment, in a hash value of an image, and hash value segments stored in nodes of a same linked list are the same to each other; and
the hash retrieval unit includes:
a linked list locating subunit, configured to determine the target hash table according to the sequence position of the first hash value segment, and determine a target linked list used for storing the first hash value segment, from the at least one linked list of the target hash table, where the second hash value segment stored in each node of the target linked list is the same as the first hash value segment.

Further, each node of the linked list further stores information of the image to which the hash value segment in the node belongs.

Correspondingly, the apparatus may further include: an image determining unit, configured to determine, according to the image information in each node of the target linked list, the candidate images to which the second hash value segments in the nodes of the target linked list respectively belong.

In a possible implementation, to construct a hash table and a linked list in the hash table in advance, the apparatus may further include: a linked list generation unit, configured to generate the linked list in the target hash table by:
obtaining a hash value of a to-be-processed image in a database;
splitting the hash value of the image into the preset quantity of hash value segments having different sequence positions in the hash value of the image;
for each split hash value segment, obtaining a target hash table corresponding to the sequence position of the hash value segment, and determining whether a linked list used for recording the hash value segment exists in the target hash table;
generating, in response to that the linked list used for recording the hash value segment exists in the target hash table, a node recording the hash value segment, and adding the generated node to a rear end of the linked list used for recording the hash value segment; and
generating, in response to that the linked list used for recording the hash value segment does not exist in the target hash table, a node recording the hash value segment, and setting the generated node as the first node of a newly added linked list in the target hash table.

In a possible implementation, in the apparatus embodiment, the hash retrieval unit may include:
a hash transmitting subunit, configured to transmit the preset quantity of first hash value segments to multiple slave servers, where for each of the first hash value segments, each of the slave servers obtains, according to a target sequence position of the first hash value segment in the first hash value, the target hash table from an area section in which the slave server is responsible for retrieval, where the area section is a partial storage area of a storage space of a database; and
a hash retrieval subunit, configured to retrieve, by using the slave server, from the hash value segments in the target hash table, the second hash value segments that are the same as the first hash value segment; and
the image matching unit includes:
   a result receiving subunit, configured to receive a query result returned from the slave server, where the query result includes at least information of the target image that is similar to the reference image and that is retrieved from the candidate images to which the second hash value segments respectively belong.

Further, the apparatus may further include:
a fault monitoring unit, configured to determine, in response to that a faulty slave server is detected in the multiple slave servers, an area section in which the faulty slave server is currently responsible for retrieval; and
a re-assigning unit, configured to assign the area section corresponding to the faulty slave server to at least one slave server in a normal running state.

FIG. 8 is a schematic diagram of a structure of a server for applying the image retrieval method according to an embodiment in the present disclosure. The server may be a retrieval server. In FIG. 8, the server 800 may include a processor 801 and a memory 802. Certainly, the server may further include a communications interface 803, an input unit 804, a display 805, and a communications bus 806.

The processor 801, the memory 802, the communications interface 803, the input unit 804, and the display 805 communicate with each other through the communications bus 806.

In this embodiment in the present disclosure, the processor 801 may be a central processing unit (CPU), an application-specific integrated circuit (ASIC), a digital signal processor (DSP), a field programmable gate array (FPGA), or another programmable logical device.

The processor may invoke a program stored in the memory 802. Specifically, the processor may perform the operations performed by the retrieval server or the master server in FIG. 2a, FIG. 3, FIG. 5, and FIG. 6.

The memory 802 is configured to store one or more programs. The program may include program code, and the program code includes a computer operation instruction. In this embodiment in the present disclosure, the memory stores at least a program for implementing the following functions:
obtaining a first hash value of a reference image used for retrieval, where the first hash value is used for representing an image feature of the reference image;
splitting the first hash value into a preset quantity of consecutive first hash value segments having different sequence positions in the first hash value;
for each of the first hash value segments, obtaining a target hash table according to the sequence position of the first hash value segment, and retrieving, from multiple hash value segments in the target hash table, second hash value segments that are the same as the first hash value segment, where the target hash table is used for storing hash value segments, which are at the sequence position of the first hash value segment, in hash values of images; and
retrieving, from candidate images to which the second hash value segments respectively belong, a target image similar to the reference image. Optionally, the memory 802 may further store a program corresponding to any implementation of the above image retrieval method.

In a possible implementation, the memory 802 may include a program storage area and a data storage area. The program storage area may store an operating system, an application program required by at least one function (such as a sound playback function and an image display function), and the like. The data storage area may store data, such as user data, user access data, and audio data, created according to a use process of the computer, and the like.

The communications interface 803 may be an interface of a communications module, for example, an interface of a GSM module.

Certainly, the structure of the computer device shown in FIG. 8 constitutes no limitation on the computer device in this embodiment in the present disclosure. In practices, the computer device may include more or less components than those shown in FIG. 8, or some components may be combined.

According to another aspect, the present disclosure further provides a storage medium, storing a computer program. The computer program, when being loaded and executed by a processor, implements the image retrieval method described in any one of the foregoing embodiments.

The embodiments in this specification are all described in a progressive manner, that is, each embodiment focuses on a difference from other embodiments. For same or similar parts in the embodiments, mutual reference may be made to these embodiments. The apparatus embodiment is basically similar to the method embodiment, and therefore is described briefly. For related parts, one may refer to descriptions in the method embodiment.

At last, the relational terms herein such as first and second are used only to differentiate an entity or operation from another entity or operation, and do not require or imply any actual relationship or sequence between these entities or operations. In addition, the terms "include", "comprise", and any variants thereof are intended to cover a non-exclusive inclusion. Therefore, a process, method, object, or device that includes a series of elements not only includes such elements, but also includes other elements not specified expressly, or may include inherent elements of the process, method, object, or device. Unless otherwise specified, an element limited by "include a/an..." does not exclude other same elements existing in the process, the method, the object, or the device that includes the element.

The foregoing descriptions of the disclosed embodiments enable a person skilled in the art to implement or use the present disclosure. Various modifications to these embodiments are obvious to a person skilled in the art. The general principles defined in the present disclosure may be implemented in other embodiments without departing from the scope of the present disclosure. Therefore, the present disclosure is not limited to these embodiments illustrated in the present disclosure, but needs to conform to the broadest scope consistent with the principles and novel features disclosed in the present disclosure.

The foregoing descriptions are merely exemplary implementations of the present disclosure.

## Claims

1. An image retrieval method, applied to a server, comprising:
obtaining a first hash value of a reference image used for retrieval, wherein the first hash value represents an image feature of the reference image (S302);
splitting the first hash value into a preset quantity of first hash value segments having different sequence positions in the first hash value (S303);
for each of the first hash value segments, obtaining a target hash table according to the sequence position of the first hash value segment, and retrieving, from hash value segments in the target hash table, second hash value segments that are the same as the first hash value segment, wherein the target hash table is used for storing hash value segments, which are at the sequence position of the first hash value segment, in hash values of images (S304); and
retrieving, from candidate images to which the second hash value segments respectively belong, a target image similar to the reference image (S305),
**characterized in that**
the target hash table stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other;
the retrieving, from hash value segments in the target hash table, second hash value segments that are the same as the first hash value segment comprises:
determining a target linked list from the at least one linked list of the target hash table, wherein the second hash value segment stored in each node of the target linked list is the same as the first hash value segment (S305); and
the retrieving, from candidate images to which the second hash value segments respectively belong, a target image similar to the reference image comprises:
obtaining, from nodes in the target linked list, second hash values of the candidate images to which the second hash value segments respectively belong, wherein the second hash values respectively represent the image feature of the candidate images (S306);
calculating a hamming distance between each of the candidate images and the reference image according to the first hash value of the reference image and the second hash values of the candidate images (S308); and
retrieving, from the candidate images to which the second hash value segments respectively belong, the target image whose hamming distance to the reference image is less than a preset threshold (S309).

2. The image retrieval method according to claim 1, wherein the preset quantity equals to the preset threshold plus 1.

3. The image retrieval method according to claim 1, wherein each node of the linked list further stores image information of the image to which the hash value segment in the node belongs; and
after the determining a target linked list from the at least one linked list of the target hash table, the image retrieval method further comprises:
obtaining, according to the image information in each node of the target linked list, the candidate images to which the second hash value segments in the nodes of the target linked list respectively belong.

4. The image retrieval method according to claim 1, wherein the linked list in the target hash table is generated by:
obtaining a hash value of a to-be-processed image in a database;
splitting the hash value of the image into the preset quantity of hash value segments having different sequence positions in the hash value of the image;
for each of the split hash value segments,
obtaining a target hash table corresponding to the sequence position of the hash value segment, and determining whether a linked list used for recording the hash value segment exists in the target hash table;
generating, in response to that the linked list used for recording the hash value segment exists in the target hash table, a node recording the hash value segment, and adding the generated node to a rear end of the linked list used for recording the hash value segment; and
generating, in response to that the linked list used for recording the hash value segment does not exist in the target hash table, a node recording the hash value segment, and setting the generated node as the first node of a newly added linked list in the target hash table.

5. The image retrieval method according to any one of claims 1 to 4, wherein the obtaining a target hash table according to the sequence position of the first hash value segment comprises:
transmitting the preset quantity of first hash value segments to a plurality of slave servers, wherein for each of the first hash value segments, each of the slave servers obtains, according to the sequence position of the first hash value segment, the target hash table from an area section in which the slave server is responsible for retrieval, wherein the area section is a partial storage area of a storage space of a database;
the retrieving, from hash value segments in the target hash table, second hash value segments that are the same as the first hash value segment comprises:
retrieving, by the slave servers, from the hash value segments in the target hash table, the second hash value segments that are the same as the first hash value segment; and
the retrieving, from candidate images to which the second hash value segments respectively belong, a target image similar to the reference image comprises:
receiving a query result returned from the slave servers, wherein the query result comprises at least information of the target image that is similar to the reference image and that is retrieved from the candidate images to which the second hash value segments respectively belong.

6. The image retrieval method according to claim 5, further comprising:
determining, in response to that a faulty slave server is detected in the plurality of slave servers, an area section in which the faulty slave server is currently responsible for retrieval; and
assigning the area section corresponding to the faulty slave server to at least one slave server in a normal running state.

7. An image retrieval apparatus, comprising:
a hash obtaining unit, configured to obtain a first hash value of a reference image used for retrieval, wherein the first hash value represents an image feature of the reference image (701);
a hash splitting unit, configured to split the first hash value into a preset quantity of first hash value segments having different sequence positions in the first hash value (702);
a hash retrieval unit, configured to, for each of the first hash value segments, obtain a target hash table according to the sequence position of the first hash value segment, and retrieve, from hash value segments in the target hash table, second hash value segments that are the same as the first hash value segment, wherein the target hash table is used for storing hash value segments, which are at the sequence position of the first hash value segment, in hash values of images (703); and
an image matching unit, configured to retrieve, from candidate images to which the second hash value segments respectively belong, a target image similar to the reference image (704),
**characterized in that**
the target hash table obtained by the hash retrieval unit stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other; and
the hash retrieval unit comprises:
a linked list determining subunit, configured to determine the target hash table according to the sequence position of the first hash value segment, and determine a target linked list used for storing the first hash value segment, from the at least one linked list of the target hash table, wherein the second hash value segment stored in each node of the target linked list is the same as the first hash value segment; and
the image matching unit comprises:
a hash determining unit, configured to obtain, from nodes in the target linked list, second hash values of the candidate images to which the second hash value segments respectively belong, wherein the second hash values respectively represent the image feature of the candidate images;
a distance calculation unit, configured to calculate a hamming distance between each of the candidate image and the reference image according to the first hash value of the reference image and the second hash values of the candidate images; and
a distance matching unit, configured to retrieve, from the candidate images to which the second hash value segments respectively belong, the target image whose hamming distance to the reference image is less than a preset threshold.

8. The image retrieval apparatus according to claim 7, wherein the preset quantity equals to the preset threshold plus 1.

9. The image retrieval apparatus according to claim 7, further comprising a linked list generation unit, configured to generate a linked list in the target hash table by:
obtaining a hash value of a to-be-processed image in a database;
splitting the hash value of the image into the preset quantity of hash value segments having different sequence positions in the hash value of the image;
for each of the split hash value segments,
obtaining a target hash table corresponding to the sequence position of the hash value segment, and determining whether a linked list used for recording the hash value segment exists in the target hash table;
generating, in response to that the linked list used for recording the hash value segment exists in the target hash table, a node recording the hash value segment, and adding the generated node to a rear end of the linked list used for recording the hash value segment; and
generating, in response to that the linked list used for recording the hash value segment does not exist in the target hash table, a node recording the hash value segment, and setting the generated node as the first node of a newly added linked list in the target hash table.

10. The image retrieval apparatus according to any one of claims 7 to 9, wherein the hash retrieval unit comprises:
a hash transmitting subunit, configured to transmit the preset quantity of first hash value segments to a plurality of slave servers, wherein for each of the first hash value segments, each of the slave servers obtains, according to a target sequence position of the first hash value segment in the first hash value, the target hash table from an area section in which the slave server is responsible for retrieval, wherein the area section is a partial storage area of a storage space of a database; and
a hash retrieval subunit, configured to retrieve, by using the slave servers, from the hash value segments in the target hash table, the second hash value segments that are the same as the first hash value segment; and
the image matching unit comprises:
a result receiving subunit, configured to receive a query result returned from the slave servers, wherein the query result comprises at least information of the target image that is similar to the reference image and that is retrieved from the candidate images to which the second hash value segments respectively belong.

11. A server, comprising the image retrieval apparatus according to any one of claims 7-10.

12. A readable storage medium, storing a computer program, wherein the computer program is used to, when being loaded and executed by a processor, perform the image retrieval method according to any one of claims 1 to 6.

13. An image retrieval system (410), comprising:
at least one master server (4121) and a plurality of slave servers (4122);
wherein the master server (4121) is configured to:
obtain a first hash value of a reference image used for retrieval, the first hash value representing an image feature of the reference image;
split the first hash value into a preset quantity of first hash value segments having different sequence positions in the first hash value;
transmit the preset quantity of first hash value segments to the plurality of slave servers; and
receive a query result returned from the slave server, wherein the query result comprises at least information of a target image that is similar to the reference image and that is retrieved by the slave server; and the slave server (4122) is configured to, for each of the first hash value segments,
obtain, according to the sequence position of the first hash value segment, a target hash table from an area section in which the slave server is responsible for retrieval;
retrieve, from hash value segments in the target hash table, second hash value segments that are the same as the first hash value segment, wherein the area section is a partial storage area of a storage space of a database, and the target hash table is used for storing hash value segments, which are at the sequence position of the first hash value segment, in hash values of images;
retrieve, from candidate images to which the second hash value segments respectively belong, the target image similar to the reference image; and
transmit the information of the retrieved target image to the master server;
**characterized in that**
the target hash table stores at least one linked list, each node in the linked list is used for storing a hash value segment, which is at the sequence position of the first hash value segment, in a hash value of an image, each node in the linked list further stores a hash value of the image to which the hash value segment belongs, and hash value segments stored in nodes of a same linked list are the same to each other; and
the slave server (4122) is further configured for:
determining a target linked list from the at least one linked list of the target hash table, wherein the second hash value segment stored in each node of the target linked list is the same as the first hash value segment; and
obtaining, from nodes in the target linked list, second hash values of the candidate images to which the second hash value segments respectively belong, wherein the second hash values respectively represent the image feature of the candidate images;
calculating a hamming distance between each of the candidate images and the reference image according to the first hash value of the reference image and the second hash values of the candidate images; and
retrieving, from the candidate images to which the second hash value segments respectively belong, the target image whose hamming distance to the reference image is less than a preset threshold.

## Patentansprüche

1. Bildabrufverfahren, das auf einen Server angewendet wird, umfassend:
Erhalten eines ersten Hash-Werts eines zum Abrufen verwendeten Referenzbilds, wobei der erste Hash-Wert ein Bildmerkmal des Referenzbilds darstellt (S302);
Aufteilen des ersten Hash-Werts in eine voreingestellte Menge erster Hash-Wert-Segmente mit unterschiedlichen Sequenzpositionen in dem ersten Hash-Wert (S303);
für jedes der ersten Hash-Wert-Segmente, Erhalten einer Ziel-Hash-Tabelle gemäß der Sequenzposition des ersten Hash-Wert-Segments und Abrufen, aus Hash-Wert-Segmenten in der Ziel-Hash-Tabelle, von zweiten Hash-Wert-Segmenten, die gleich dem ersten Hash-Wert-Segment sind, wobei die Ziel-Hash-Tabelle zum Speichern von Hash-Wert-Segmenten, die sich an der Sequenzposition des ersten Hash-Wert-Segments befinden, in Hash-Werten von Bildern verwendet wird (S304); und
Abrufen, aus Kandidatenbildern, zu denen die zweiten Hash-Wert-Segmente jeweils gehören, eines Zielbilds, das dem Referenzbild ähnlich ist (S305),
**dadurch gekennzeichnet, dass**
die Ziel-Hash-Tabelle mindestens eine verknüpfte Liste speichert, wobei jeder Knoten in der verknüpften Liste zum Speichern eines Hash-Wert-Segments verwendet wird, das sich an der Sequenzposition des ersten Hash-Wert-Segments befindet, jeder Knoten in der verknüpften Liste ferner einen Hash-Wert des Bilds speichert, zu dem das Hash-Wert-Segment gehört, und Hash-Wert-Segmente, die in Knoten derselben verknüpften Liste gespeichert sind, identisch miteinander sind;
das Abrufen, aus Hash-Wert-Segmenten in der Ziel-Hash-Tabelle, von zweiten Hash-Wert-Segmenten, die gleich dem ersten Hash-Wert-Segment sind, Folgendes umfasst:
Bestimmen einer verknüpften Zielliste aus der mindestens einen verknüpften Liste der Ziel-Hash-Tabelle, wobei das zweite Hash-Wert-Segment, das in jedem Knoten der verknüpften Zielliste gespeichert ist, gleich dem ersten Hash-Wert-Segment ist (S305); und
das Abrufen, aus Kandidatenbildern, zu denen die zweiten Hash-Wert-Segmente jeweils gehören, eines Zielbilds, das dem Referenzbild ähnlich ist, Folgendes umfasst:
Abrufen, aus Knoten in der verknüpften Zielliste, von zweiten Hash-Werten der Kandidatenbilder, zu denen die zweiten Hash-Wert-Segmente jeweils gehören, wobei die zweiten Hash-Werte jeweils das Bildmerkmal der Kandidatenbilder darstellen (S306);
Berechnen eines Hamming-Abstands zwischen jedem der Kandidatenbilder und dem Referenzbild gemäß dem ersten Hash-Wert des Referenzbilds und den zweiten Hash-Werten der Kandidatenbilder (S308); und
Abrufen, aus den Kandidatenbildern, zu denen die zweiten Hash-Wert-Segmente jeweils gehören, des Zielbildes, dessen Hamming-Abstand zu dem Referenzbild kleiner als ein voreingestellter Schwellenwert ist (S309).

2. Bildabrufverfahren nach Anspruch 1, wobei die voreingestellte Menge dem voreingestellten Schwellenwert plus 1 entspricht.

3. Bildabrufverfahren nach Anspruch 1, wobei jeder Knoten der verknüpften Liste ferner Bildinformationen des Bilds speichert, zu dem das Hash-Wert-Segment in dem Knoten gehört; und
das Bildabrufverfahren nach dem Bestimmen einer verknüpften Zielliste aus der mindestens eine verknüpften Liste der Ziel-Hash-Tabelle ferner Folgendes umfasst: Abrufen, gemäß den Bildinformationen in jedem Knoten der verknüpften Zielliste, der Kandidatenbilder, zu denen die zweiten Hash-Wert-Segmente in den Knoten der verknüpften Zielliste jeweils gehören.

4. Bildabrufverfahren nach Anspruch 1, wobei die verknüpfte Liste in der Ziel-Hash-Tabelle durch Folgendes erzeugt wird:
Abrufen eines Hash-Werts eines zu verarbeitenden Bilds in einer Datenbank;
Aufteilen des Hash-Werts des Bilds in die voreingestellte Menge von Hash-Wert-Segmenten mit unterschiedlichen Sequenzpositionen in dem Hash-Wert des Bilds;
für jedes der aufgeteilten Hash-Wert-Segmente,
Abrufen einer Ziel-Hash-Tabelle, die der Sequenzposition des Hash-Wert-Segments entspricht, und Bestimmen, ob eine verknüpfte Liste, die zum Aufzeichnen des Hash-Wert-Segments verwendet wird, in der Ziel-Hash-Tabelle vorhanden ist;
Erzeugen, als Reaktion darauf, dass die verknüpfte Liste, die zum Aufzeichnen des Hash-Wert-Segments verwendet wird, in der Ziel-Hash-Tabelle vorhanden ist, eines Knotens, der das Hash-Wert-Segment aufzeichnet, und Hinzufügen des erzeugten Knotens zu einem hinteren Ende der verknüpften Liste, die zum Aufzeichnen des Hash-Wert-Segments verwendet wird; und
Erzeugen, als Reaktion darauf, dass die verknüpfte Liste, die zum Aufzeichnen des Hash-Wert-Segments verwendet wird, nicht in der Ziel-Hash-Tabelle vorhanden ist, eines Knotens, der das Hash-Wert-Segment aufzeichnet, und Einstellen des erzeugten Knotens als den ersten Knoten einer neu hinzugefügten verknüpften Liste in der Ziel-Hash-Tabelle.

5. Bildabrufverfahren nach einem der Ansprüche 1 bis 4, wobei das Abrufen einer Ziel-Hash-Tabelle gemäß der Sequenzposition des ersten Hash-Wert-Segments Folgendes umfasst:
Übertragen der voreingestellten Menge von ersten Hash-Wert-Segmenten an mehrere Slave-Server, wobei für jedes der ersten Hash-Wert-Segmente jeder der Slave-Server gemäß der Sequenzposition des ersten Hash-Wert-Segments die Ziel-Hash-Tabelle aus einem Bereichsabschnitt erhält, in dem der Slave-Server für den Abruf verantwortlich ist, wobei der Bereichsabschnitt ein Teilspeicherbereich eines Speicherraums einer Datenbank ist;
das Abrufen, aus Hash-Wert-Segmenten in der Ziel-Hash-Tabelle, von zweiten Hash-Wert-Segmenten, die gleich dem ersten Hash-Wert-Segment sind, Folgendes umfasst:
Abrufen, durch die Slave-Server, aus den Hash-Wert-Segmenten in der Ziel-Hash-Tabelle, der zweiten Hash-Wert-Segmenten, die gleich dem ersten Hash-Wert-Segment sind; und
das Abrufen, aus Kandidatenbildern, zu denen die zweiten Hash-Wert-Segmente jeweils gehören, eines Zielbilds, das dem Referenzbild ähnlich ist, Folgendes umfasst:
Empfangen eines Abfrageergebnisses, das von den Slave-Servern zurückgegeben wird, wobei das Abfrageergebnis mindestens Informationen des Zielbilds umfasst, das dem Referenzbild ähnlich ist und das aus den Kandidatenbildern abgerufen wird, zu denen die zweiten Hash-Wert-Segmente jeweils gehören.

6. Bildabrufverfahren nach Anspruch 5, ferner umfassend:
Bestimmen, als Reaktion darauf, dass ein fehlerhafter Slave-Server in den mehreren Slave-Servern detektiert wird, eines Bereichsabschnitts, in dem der fehlerhafte Slave-Server derzeit für den Abruf verantwortlich ist; und
Zuweisen des Bereichsabschnitts, der dem fehlerhaften Slave-Server entspricht, zu mindestens einem Slave-Server in einem normalen Arbeitszustand.

7. Bildabrufeinrichtung, umfassend:
eine Hash-Erhalteeinheit, ausgelegt zum Erhalten eines ersten Hash-Werts eines zum Abrufen verwendeten Referenzbilds, wobei der erste Hash-Wert ein Bildmerkmal des Referenzbilds darstellt (701);
eine Hash-Aufteilungseinheit, ausgelegt zum Aufteilen des ersten Hash-Werts in eine voreingestellte Menge erster Hash-Wert-Segmente mit unterschiedlichen Sequenzpositionen in dem ersten Hash-Wert (702);
eine Hash-Abrufeinheit, ausgelegt zum, für jedes der ersten Hash-Wert-Segmente, Erhalten einer Ziel-Hash-Tabelle gemäß der Sequenzposition des ersten Hash-Wert-Segments und Abrufen, aus Hash-Wert-Segmenten in der Ziel-Hash-Tabelle, von zweiten Hash-Wert-Segmenten, die gleich dem ersten Hash-Wert-Segment sind, wobei die Ziel-Hash-Tabelle zum Speichern von Hash-Wert-Segmenten, die sich an der Sequenzposition des ersten Hash-Wert-Segments befinden, in Hash-Werten von Bildern verwendet wird (703); und
eine Bildabgleichseinheit, ausgelegt zum Abrufen, aus Kandidatenbildern, zu denen die zweiten Hash-Wert-Segmente jeweils gehören, eines Zielbilds, das dem Referenzbild ähnlich ist (704),
**dadurch gekennzeichnet, dass**
die durch die Hash-Abrufeinheit erhaltene Ziel-Hash-Tabelle mindestens eine verknüpfte Liste speichert, wobei jeder Knoten in der verknüpften Liste zum Speichern eines Hash-Wert-Segments verwendet wird, das sich an der Sequenzposition des ersten Hash-Wert-Segments befindet, jeder Knoten in der verknüpften Liste ferner einen Hash-Wert des Bilds speichert, zu dem das Hash-Wert-Segment gehört, und Hash-Wert-Segmente, die in Knoten derselben verknüpften Liste gespeichert sind, identisch miteinander sind; und
die Hash-Abrufeinheit Folgendes umfasst:
eine Verknüpfte-Liste-Bestimmungsuntereinheit, ausgelegt zum Bestimmen der Ziel-Hash-Tabelle gemäß der Sequenzposition des ersten Hash-Wert-Segments und Bestimmen einer verknüpfte Zielliste, die zum Speichern des ersten Hash-Wert-Segments verwendet wird, aus der mindestens einen verknüpften Liste der Ziel-Hash-Tabelle, wobei das zweite Hash-Wert-Segment, das in jedem Knoten der verknüpften Zielliste gespeichert ist, gleich dem ersten Hash-Wert-Segment ist; und
die Bildabgleichseinheit Folgendes umfasst:
eine Hash-Bestimmungseinheit, ausgelegt zum Abrufen, aus Knoten in der verknüpften Zielliste, von zweiten Hash-Werten der Kandidatenbilder, zu denen die zweiten Hash-Wert-Segmente jeweils gehören, wobei die zweiten Hash-Werte jeweils das Bildmerkmal der Kandidatenbilder darstellen;
eine Abstandsberechnungseinheit, ausgelegt zum Berechnen eines Hamming-Abstands zwischen jedem des Kandidatenbilds und des Referenzbilds gemäß dem ersten Hash-Wert des Referenzbilds und den zweiten Hash-Werten der Kandidatenbilder; und
eine Abstandsabgleichseinheit, ausgelegt zum Abrufen, aus den Kandidatenbildern, zu denen die zweiten Hash-Wert-Segmente jeweils gehören, des Zielbildes, dessen Hamming-Abstand zu dem Referenzbild kleiner als ein voreingestellter Schwellenwert ist.

8. Bildabrufeinrichtung nach Anspruch 7, wobei die voreingestellte Menge dem voreingestellten Schwellenwert plus 1 entspricht.

9. Bildabrufeinrichtung nach Anspruch 7, ferner umfassend eine Verknüpfte-Liste-Erzeugungseinheit, ausgelegt zum Erzeugen einer verknüpften Liste in der Ziel-Hash-Tabelle durch:
Abrufen eines Hash-Werts eines zu verarbeitenden Bilds in einer Datenbank;
Aufteilen des Hash-Werts des Bilds in die voreingestellte Menge von Hash-Wert-Segmenten mit unterschiedlichen Sequenzpositionen in dem Hash-Wert des Bilds;
für jedes der aufgeteilten Hash-Wert-Segmente,
Abrufen einer Ziel-Hash-Tabelle, die der Sequenzposition des Hash-Wert-Segments entspricht, und Bestimmen, ob eine verknüpfte Liste, die zum Aufzeichnen des Hash-Wert-Segments verwendet wird, in der Ziel-Hash-Tabelle vorhanden ist;
Erzeugen, als Reaktion darauf, dass die verknüpfte Liste, die zum Aufzeichnen des Hash-Wert-Segments verwendet wird, in der Ziel-Hash-Tabelle vorhanden ist, eines Knotens, der das Hash-Wert-Segment aufzeichnet, und Hinzufügen des erzeugten Knotens zu einem hinteren Ende der verknüpften Liste, die zum Aufzeichnen des Hash-Wert-Segments verwendet wird; und
Erzeugen, als Reaktion darauf, dass die verknüpfte Liste, die zum Aufzeichnen des Hash-Wert-Segments verwendet wird, nicht in der Ziel-Hash-Tabelle vorhanden ist, eines Knotens, der das Hash-Wert-Segment aufzeichnet, und Einstellen des erzeugten Knotens als den ersten Knoten einer neu hinzugefügten verknüpften Liste in der Ziel-Hash-Tabelle.

10. Bildabrufeinrichtung nach einem der Ansprüche 7 bis 9, wobei die Hash-Abrufeinheit Folgendes umfasst:
eine Hash-Übertragungsuntereinheit, ausgelegt zum Übertragen der voreingestellten Menge von ersten Hash-Wert-Segmenten an mehrere Slave-Server, wobei für jedes der ersten Hash-Wert-Segmente jeder der Slave-Server gemäß einer Zielsequenzposition des ersten Hash-Wert-Segments in dem ersten Hash-Wert die Ziel-Hash-Tabelle aus einem Bereichsabschnitt erhält, in dem der Slave-Server für den Abruf verantwortlich ist, wobei der Bereichsabschnitt ein Teilspeicherbereich eines Speicherraums einer Datenbank ist; und
eine Hash-Abrufuntereinheit, ausgelegt zum Abrufen, unter Verwendung der Slave-Server, aus den Hash-Wert-Segmenten in der Ziel-Hash-Tabelle, der zweiten Hash-Wert-Segmenten, die gleich dem ersten Hash-Wert-Segment sind; und
die Bildabgleichseinheit Folgendes umfasst:
eine Ergebnisempfangsuntereinheit, ausgelegt zum Empfangen eines Abfrageergebnisses, das von den Slave-Servern zurückgegeben wird, wobei das Abfrageergebnis mindestens Informationen des Zielbilds umfasst, das dem Referenzbild ähnlich ist und das aus den Kandidatenbildern abgerufen wird, zu denen die zweiten Hash-Wert-Segmente jeweils gehören.

11. Server, umfassend die Bildabrufeinrichtung nach einem der Ansprüche 7-10.

12. Lesbares Speichermedium, das ein Computerprogramm speichert, wobei das Computerprogramm verwendet wird, um beim Laden und Ausführen durch einen Prozessor das Bildabrufverfahren nach einem der Ansprüche 1 bis 6 durchzuführen.

13. Bildabrufsystem (410), umfassend:
mindestens einen Master-Server (4121) und mehrere Slave-Server (4122);
wobei der Master-Server (4121) zu Folgendem ausgelegt ist:
Erhalten eines ersten Hash-Werts eines zum Abrufen verwendeten Referenzbilds, wobei der erste Hash-Wert ein Bildmerkmal des Referenzbilds darstellt;
Aufteilen des ersten Hash-Werts in eine voreingestellte Menge erster Hash-Wert-Segmente mit unterschiedlichen Sequenzpositionen in dem ersten Hash-Wert;
Übertragen der voreingestellten Menge erster Hash-Wert-Segmente an die mehreren Slave-Server; und
Empfangen eines Abfrageergebnisses, das von dem Slave-Server zurückgegeben wird, wobei das Abfrageergebnis mindestens Informationen eines Zielbilds umfasst, das dem Referenzbild ähnlich ist und das durch den Slave-Server abgerufen wird; und
der Slave-Server (4122) ausgelegt ist zum, für jedes der ersten Hash-Wert-Segmente,
Abrufen, gemäß der Sequenzposition des ersten Hash-Wert-Segments, einer Ziel-Hash-Tabelle aus einem Bereichsabschnitt, in dem der Slave-Server für den Abruf zuständig ist;
Abrufen, aus Hash-Wert-Segmenten in der Ziel-Hash-Tabelle, von zweiten Hash-Wert-Segmenten, die gleich dem ersten Hash-Wert-Segment sind, wobei der Bereichsabschnitt ein Teilspeicherbereich eines Speicherraums einer Datenbank ist, und die Ziel-Hash-Tabelle zum Speichern von Hash-Wert-Segmenten, die sich an der Sequenzposition des ersten Hash-Wert-Segments befinden, in Hash-Werten von Bildern verwendet wird;
Abrufen, aus Kandidatenbildern, zu denen die zweiten Hash-Wert-Segmente jeweils gehören, des Zielbilds, das dem Referenzbild ähnlich ist; und
Übertagen der Informationen des abgerufenen Zielbilds an den Master-Server;
**dadurch gekennzeichnet, dass**
die Ziel-Hash-Tabelle mindestens eine verknüpfte Liste speichert, wobei jeder Knoten in der verknüpften Liste zum Speichern eines Hash-Wert-Segments verwendet wird, das sich an der Sequenzposition des ersten Hash-Wert-Segments befindet, jeder Knoten in der verknüpften Liste ferner einen Hash-Wert des Bilds speichert, zu dem das Hash-Wert-Segment gehört, und Hash-Wert-Segmente, die in Knoten derselben verknüpften Liste gespeichert sind, identisch miteinander sind; und
der Slave-Server (4122) ferner zu Folgendem ausgelegt ist:
Bestimmen einer verknüpften Zielliste aus der mindestens einen verknüpften Liste der Ziel-Hash-Tabelle, wobei das zweite Hash-Wert-Segment, das in jedem Knoten der verknüpften Zielliste gespeichert ist, gleich dem ersten Hash-Wert-Segment ist; und
Abrufen, aus Knoten in der verknüpften Zielliste, von zweiten Hash-Werten der Kandidatenbilder, zu denen die zweiten Hash-Wert-Segmente jeweils gehören, wobei die zweiten Hash-Werte jeweils das Bildmerkmal der Kandidatenbilder darstellen;
Berechnen eines Hamming-Abstands zwischen jedem der Kandidatenbilder und dem Referenzbild gemäß dem ersten Hash-Wert des Referenzbilds und den zweiten Hash-Werten der Kandidatenbilder; und
Abrufen, aus den Kandidatenbildern, zu denen die zweiten Hash-Wert-Segmente jeweils gehören, des Zielbildes, dessen Hamming-Abstand zu dem Referenzbild kleiner als ein voreingestellter Schwellenwert ist.

## Revendications

1. Procédé de récupération d'images, appliqué à un serveur, le procédé comprenant les étapes suivantes :
obtenir une première valeur de hachage d'une image de référence utilisée pour la récupération, la première valeur de hachage représentant une caractéristique d'image de l'image de référence (S302) ;
fractionner la première valeur de hachage en une quantité prédéfinie de segments de première valeur de hachage ayant différentes positions de séquence dans la première valeur de hachage (S303) ;
pour chacun des segments de la première valeur de hachage, obtenir une table de hachage cible en fonction de la position de séquence du segment de la première valeur de hachage, et récupérer, à partir des segments de valeur de hachage dans la table de hachage cible, des segments de deuxième valeur de hachage qui sont identiques au segment de première valeur de hachage, la table de hachage cible étant utilisée pour stocker les segments de valeur de hachage qui se trouvent à la position de séquence du segment de première valeur de hachage, dans les valeurs de hachage des images (S304) ; et
récupérer, parmi les images candidates auxquelles appartiennent respectivement les segments de deuxième valeur de hachage, une image cible similaire à l'image de référence (S305),
**caractérisé en ce que** :
la table de hachage cible stocke au moins une liste liée, chaque noeud de la liste liée est utilisé pour stocker un segment de valeur de hachage, qui se trouve à la position de séquence du segment de première valeur de hachage, dans une valeur de hachage d'une image, chaque noeud de la liste liée stockant en outre une valeur de hachage de l'image à laquelle le segment de valeur de hachage appartient, et les segments de valeur de hachage stockés dans les noeuds d'une même liste liée étant identiques l'un à l'autre ;
l'extraction, à partir des segments de valeur de hachage de la table de hachage cible, des segments de deuxième valeur de hachage qui sont identiques au segment de première valeur de hachage comprend :
de déterminer une liste chaînée cible à partir de l'au moins une liste chaînée de la table de hachage cible, où le segment de deuxième valeur de hachage stocké dans chaque noeud de la liste chaînée cible est identique au segment de première valeur de hachage (S305) ; et
l'extraction, à partir des images candidates auxquelles les segments de deuxième valeur de hachage appartiennent respectivement, d'une image cible similaire à l'image de référence comprend :
d'obtenir, à partir des noeuds de la liste chaînée cible, des deuxièmes valeurs de hachage des images candidates auxquelles les segments de deuxième valeur de hachage appartiennent respectivement, les deuxièmes valeurs de hachage représentant respectivement la caractéristique d'image des images candidates (S306) ;
de calculer une distance de Hamming entre chacune des images candidates et l'image de référence en fonction de la première valeur de hachage de l'image de référence et des deuxièmes valeurs de hachage des images candidates (S308) ; et
de récupérer, parmi les images candidates auxquelles appartiennent respectivement les segments de deuxième valeur de hachage, l'image cible dont la distance de Hamming par rapport à l'image de référence est inférieure à un seuil prédéfini (S309).

2. Procédé de récupération d'images selon la revendication 1, dans lequel la quantité prédéfinie est égale au seuil prédéfini plus 1.

3. Procédé de récupération d'images selon la revendication 1, dans lequel chaque noeud de la liste liée stocke en outre des informations d'image de l'image à laquelle appartient le segment de valeur de hachage dans le noeud ; et
après la détermination d'une liste liée cible à partir de l'au moins une liste liée de la table de hachage cible, le procédé de récupération d'images comprend en outre : d'obtenir, en fonction des informations d'image dans chaque noeud de la liste chaînée cible, les images candidates auxquelles appartiennent respectivement les segments de deuxième valeur de hachage dans les noeuds de la liste chaînée cible.

4. Procédé de récupération d'images selon la revendication 1, dans lequel la liste liée de la table de hachage cible est générée :
en obtenant une valeur de hachage d'une image à traiter dans une base de données ;
en fractionnant la valeur de hachage de l'image en une quantité prédéfinie de segments de valeur de hachage ayant des positions de séquence différentes dans la valeur de hachage de l'image ;
pour chacun des segments de valeur de hachage fractionnés,
en obtenant une table de hachage cible correspondant à la position de séquence du segment de valeur de hachage, et en déterminant si une liste chaînée utilisée pour enregistrer le segment de valeur de hachage existe dans la table de hachage cible ;
en générant, en réponse au fait que la liste chaînée utilisée pour enregistrer le segment de valeur de hachage existe dans la table de hachage cible, un noeud enregistrant le segment de valeur de hachage, et en ajoutant le noeud généré à une extrémité arrière de la liste chaînée utilisée pour enregistrer le segment de valeur de hachage ; et
en générant, en réponse au fait que la liste chaînée utilisée pour enregistrer le segment de valeur de hachage n'existe pas dans la table de hachage cible, un noeud enregistrant le segment de valeur de hachage, et en définissant le noeud généré comme le premier noeud d'une liste chaînée nouvellement ajoutée dans la table de hachage cible.

5. Procédé de récupération d'images selon l'une quelconque des revendications 1 à 4, dans lequel l'obtention d'une table de hachage cible en fonction de la position de séquence du premier segment de valeur de hachage comprend :
de transmettre la quantité prédéfinie de segments de première valeur de hachage à plusieurs serveurs esclaves où, pour chacun des segments de première valeur de hachage, chacun des serveurs esclaves obtient, en fonction de la position de séquence du segment de première valeur de hachage, la table de hachage cible à partir d'une section de zone dans laquelle le serveur esclave est responsable de l'extraction, où la section de zone est une zone de stockage partielle d'un espace de stockage d'une base de données ;
l'extraction, à partir des segments de valeur de hachage de la table de hachage cible, des segments de deuxième valeur de hachage qui sont identiques au segment de première valeur de hachage comprend :
l'extraction, par les serveurs esclaves, à partir des segments de valeur de hachage dans la table de hachage cible, des segments de deuxième valeur de hachage qui sont identiques au segment de première valeur de hachage ; et
l'extraction, à partir des images candidates auxquelles les segments de deuxième valeur de hachage appartiennent respectivement, d'une image cible similaire à l'image de référence comprend :
la réception d'un résultat de requête renvoyé depuis les serveurs esclaves, le résultat de requête comprenant au moins des informations de l'image cible qui est similaire à l'image de référence et qui est extraite des images candidates auxquelles appartiennent respectivement les segments de deuxième valeur de hachage.

6. Procédé de récupération d'images selon la revendication 5, comprenant en outre les étapes suivantes :
déterminer, en réponse à la détection d'un serveur esclave défectueux dans la pluralité de serveurs esclaves, une section de zone dans laquelle le serveur esclave défectueux est actuellement responsable de la récupération ; et
assigner la section de zone correspondant au serveur esclave défectueux à au moins un serveur esclave en état de fonctionnement normal.

7. Appareil de récupération d'images comprenant :
une unité d'obtention de hachage, configurée pour obtenir une première valeur de hachage d'une image de référence utilisée pour l'extraction, la première valeur de hachage représentant une caractéristique d'image de l'image de référence (701) ;
une unité de fractionnement du hachage, configurée pour fractionner la première valeur de hachage en une quantité prédéfinie de segments de première valeur de hachage ayant différentes positions de séquence dans la première valeur de hachage (702) ;
une unité d'extraction de hachage configurée pour, pour chacun des segments de la première valeur de hachage, obtenir une table de hachage cible en fonction de la position de séquence du segment de la première valeur de hachage, et récupérer, à partir des segments de valeur de hachage dans la table de hachage cible, des segments de deuxième valeur de hachage qui sont identiques au segment de première valeur de hachage, la table de hachage cible étant utilisée pour stocker les segments de valeur de hachage qui se trouvent à la position de séquence du segment de première valeur de hachage, dans les valeurs de hachage des images (703) ; et
une unité de mise en correspondance d'images, configurée pour récupérer, parmi les images candidates auxquelles appartiennent respectivement les segments de deuxième valeur de hachage, une image cible similaire à l'image de référence (704),
**caractérisé en ce que** :
la table de hachage cible obtenue par l'unité d'extraction de hachage stocke au moins une liste liée, chaque noeud de la liste liée est utilisé pour stocker un segment de valeur de hachage, qui se trouve à la position de séquence du segment de première valeur de hachage, dans une valeur de hachage d'une image, chaque noeud de la liste liée stockant en outre une valeur de hachage de l'image à laquelle le segment de valeur de hachage appartient, et les segments de valeur de hachage stockés dans les noeuds d'une même liste liée étant identiques l'un à l'autre ;
l'unité d'extraction de hachage comprend :
une sous-unité de détermination de liste chaînée, configurée pour déterminer la table de hachage cible en fonction de la position de séquence du segment de première valeur de hachage, et déterminer une liste chaînée cible utilisée pour stocker le segment de première valeur de hachage, à partir d'au moins une liste chaînée de la table de hachage cible, où le segment de deuxième valeur de hachage stocké dans chaque noeud de la liste chaînée cible est identique au segment de première valeur de hachage ; et
l'unité de mise en correspondance d'images comprend :
une unité de détermination de hachage, configurée pour obtenir, à partir des noeuds de la liste chaînée cible, des deuxièmes valeurs de hachage des images candidates auxquelles les segments de deuxième valeur de hachage appartiennent respectivement, les deuxièmes valeurs de hachage représentant respectivement la caractéristique d'image des images candidates ;
une unité de calcul de distance, configurée pour calculer une distance de Hamming entre chacune des images candidates et l'image de référence en fonction de la première valeur de hachage de l'image de référence et des deuxièmes valeurs de hachage des images candidates ; et une unité de mise en correspondance des distances, configurée pour récupérer, parmi les images candidates auxquelles appartiennent respectivement les segments de deuxième valeur de hachage, l'image cible dont la distance de Hamming par rapport à l'image de référence est inférieure à un seuil prédéfini.

8. Appareil de récupération d'images selon la revendication 7, dans lequel la quantité prédéfinie est égale au seuil prédéfini plus 1.

9. Appareil de récupération d'images selon la revendication 7, comprenant en outre une unité de génération de liste liée, configurée pour générer une liste liée dans la table de hachage cible :
en obtenant une valeur de hachage d'une image à traiter dans une base de données ;
en fractionnant la valeur de hachage de l'image en une quantité prédéfinie de segments de valeur de hachage ayant des positions de séquence différentes dans la valeur de hachage de l'image ;
pour chacun des segments de valeur de hachage fractionnés,
en obtenant une table de hachage cible correspondant à la position de séquence du segment de valeur de hachage, et en déterminant si une liste chaînée utilisée pour enregistrer le segment de valeur de hachage existe dans la table de hachage cible ;
en générant, en réponse au fait que la liste chaînée utilisée pour enregistrer le segment de valeur de hachage existe dans la table de hachage cible, un noeud enregistrant le segment de valeur de hachage, et en ajoutant le noeud généré à une extrémité arrière de la liste chaînée utilisée pour enregistrer le segment de valeur de hachage ; et
en générant, en réponse au fait que la liste chaînée utilisée pour enregistrer le segment de valeur de hachage n'existe pas dans la table de hachage cible, un noeud enregistrant le segment de valeur de hachage, et en définissant le noeud généré comme le premier noeud d'une liste chaînée nouvellement ajoutée dans la table de hachage cible.

10. Appareil de récupération d'images selon l'une quelconque des revendications 7 à 9, dans lequel l'unité de récupération de hachage comprend :
une sous-unité de transmission de hachage, configurée pour transmettre la quantité prédéfinie de segments de première valeur de hachage à plusieurs serveurs esclaves, où, pour chacun des segments de première valeur de hachage, chacun des serveurs esclaves obtient, en fonction d'une position de séquence cible du segment de première valeur de hachage dans la première valeur de hachage, la table de hachage cible à partir d'une section de zone dans laquelle le serveur esclave est responsable de l'extraction, où la section de zone est une zone de stockage partielle d'un espace de stockage d'une base de données ; et
une sous-unité d'extraction de hachage, configurée pour extraire, à l'aide des serveurs esclaves, des segments de valeur de hachage de la table de hachage cible, les segments de deuxième valeur de hachage qui sont identiques au segment de première valeur de hachage ; et l'unité de mise en correspondance d'images comprenant : une sous-unité de réception des résultats, configurée pour recevoir un résultat de requête renvoyé depuis les serveurs esclaves, le résultat de requête comprenant au moins des informations d'image cible qui est similaire à l'image de référence et qui est extraite des images candidates auxquelles appartiennent respectivement les segments de deuxième valeur de hachage.

11. Serveur comprenant l'appareil de récupération d'images selon l'une quelconque des revendications 7 à 10.

12. Support de stockage lisible, stockant un programme d'ordinateur, dans lequel le programme d'ordinateur est utilisé pour, lorsqu'il est chargé et exécuté par un processeur, exécuter le procédé de récupération d'images selon l'une quelconque des revendications 1 à 6.

13. Système de récupération d'images (410) comprenant :
au moins un serveur maître (4121) et une pluralité de serveurs esclaves (4122) ;
dans lequel le serveur maître (4121) est configuré pour :
obtenir une première valeur de hachage d'une image de référence utilisée pour la récupération, la première valeur de hachage représentant une caractéristique d'image de l'image de référence ;
fractionner la première valeur de hachage en une quantité prédéfinie de segments de première valeur de hachage ayant différentes positions de séquence dans la première valeur de hachage ;
transmettre la quantité prédéfinie de segments de première valeur de hachage à la pluralité de serveurs esclaves ; et
recevoir un résultat de requête renvoyé par le serveur esclave, où le résultat de requête comprend au moins des informations sur une image cible qui est similaire à l'image de référence et qui est récupérée par le serveur esclave ; et
le serveur esclave (4122) est configuré pour, pour chacun des segments de la première valeur de hachage, obtenir, en fonction de la position de séquence du segment de première valeur de hachage, une table de hachage cible à partir d'une section de zone dans laquelle le serveur esclave est responsable de l'extraction ;
récupérer, à partir des segments de valeur de hachage de la table de hachage cible, les segments de deuxième valeur de hachage qui sont identiques au segment de première valeur de hachage, la section de zone étant une zone de stockage partielle d'un espace de stockage d'une base de données, et la table de hachage cible étant utilisée pour stocker les segments de valeur de hachage, qui se trouvent à la position de séquence du segment de première valeur de hachage, dans les valeurs de hachage des images ;
récupérer, parmi les images candidates auxquelles appartiennent respectivement les segments de deuxième valeur de hachage, l'image cible similaire à l'image de référence ; et
transmettre les informations relatives à l'image cible récupérée au serveur principal ;
**caractérisé en ce que** :
la table de hachage cible stocke au moins une liste liée, chaque noeud de la liste liée est utilisé pour stocker un segment de valeur de hachage, qui se trouve à la position de séquence du segment de première valeur de hachage, dans une valeur de hachage d'une image, chaque noeud de la liste liée stockant en outre une valeur de hachage de l'image à laquelle le segment de valeur de hachage appartient, et les segments de valeur de hachage stockés dans les noeuds d'une même liste liée étant identiques l'un à l'autre ; et
Le serveur esclave (4122) est en outre configuré pour : de déterminer une liste chaînée cible à partir de l'au moins une liste chaînée de la table de hachage cible, où le segment de deuxième valeur de hachage stocké dans chaque noeud de la liste chaînée cible est identique au segment de première valeur de hachage ; et
d'obtenir, à partir des noeuds de la liste chaînée cible, des deuxièmes valeurs de hachage des images candidates auxquelles les segments de deuxième valeur de hachage appartiennent respectivement, les deuxièmes valeurs de hachage représentant respectivement la caractéristique d'image des images candidates ;
de calculer une distance de Hamming entre chacune des images candidates et l'image de référence en fonction de la première valeur de hachage de l'image de référence et des deuxièmes valeurs de hachage des images candidates ; et
de récupérer, parmi les images candidates auxquelles appartiennent respectivement les segments de deuxième valeur de hachage, l'image cible dont la distance de Hamming par rapport à l'image de référence est inférieure à un seuil prédéfini.
